# EUROPEAN PATENT APPLICATION

(11) **EP 4 296 928 A1**
(43) Date of publication of application: **27.12.2023**
(21) Application number: 22755955.6
(22) Date of filing: 03.02.2022
(51) Int. Cl.: G06Q 20/38, G07G 1/12

(54) **AUTHENTICATION INFORMATION MANAGEMENT DEVICE, SYSTEM, AND METHOD, AND COMPUTER-READABLE MEDIUM**

(30) Priority: 19.02.2021 JP 2021025719
(71) Applicant: NEC Corporation, Tokyo 108-8001 (JP)
(72) Inventor: YUKI, Honami, Tokyo 108-8001 (JP); HIRAMOTO, Noriyuki, Tokyo 108-8001 (JP)
(74) Representative: MacDougall, Alan John Shaw
(86) International application number: PCT/JP2022/004270
(87) International publication number: WO 2022/176634

(57) **Abstract**

Provided is a technique that promotes information registration for biometric authentication. An authentication information management device (1) includes: an acquisition unit (11) configured to acquire a provisional registration request including first biometric information of a user and a deposit amount; a registration unit (12) configured to register provisional registration information in which a payment balance based on the deposit amount included in the provisional registration request has been associated with the first biometric information; an authentication control unit (13) configured to control first biometric authentication using the first biometric information for second biometric information in response to a payment request including the second biometric information and a payment amount; a payment unit (14) configured to pay the payment amount using the payment balance associated with the first biometric information in a case in which the first biometric authentication has succeeded; and a usage control unit (15) configured to control a use of the provisional registration information according to a result of determining whether or not the provisional registration information satisfies a first condition.

## Description

### Technical Field

The present invention relates to an authentication information management device, an authentication information management system, an authentication information management method, and an authentication information management program, and more particularly, to an authentication information management device, an authentication information management system, an authentication information management method, and an authentication information management program that manage authentication information.

### Background Art

In recent years, biometric authentication technology including face authentication has been developed, and various services including payment using the biometric authentication technology have been introduced. Patent Literature 1 discloses a technique that initially registers customer information including authentication information and a charge amount, performs authentication on the basis of purchase information in a case in which a payment request including the purchase information is acquired, and generates provisional payment information for deferred payment in a case in which the authentication has succeeded.

### Citation List

### Patent Literature

Patent Literature 1: Japanese Unexamined Patent Application Publication No. 2020-144787

### Summary of Invention

### Technical Problem

Here, in order to use a payment service based on biometric authentication, it is necessary to register personal information including biometric information of a user and payment information (for example, bank account information and credit card information) used for electronic payment in advance. However, some people have concern about registering personal information and payment information. Therefore, information registration for biometric authentication is not promoted, and the spread of the biometric authentication is hindered.

The present disclosure has been made in order to solve these problems, and an object of the present disclosure is to provide an authentication information management device, an authentication information management system, an authentication information management method, and an authentication information management program that promote information registration for biometric authentication.

### Solution to Problem

According to a first aspect of the present disclosure, there is provided an authentication information management device including:
an acquisition unit configured to acquire a provisional registration request including first biometric information of a user and a deposit amount;
a registration unit configured to register provisional registration information in which a payment balance based on the deposit amount included in the provisional registration request has been associated with the first biometric information;
an authentication control unit configured to control first biometric authentication using the first biometric information for second biometric information in response to a payment request including the second biometric information and a payment amount;
a payment unit configured to pay the payment amount using the payment balance associated with the first biometric information in a case in which the first biometric authentication has succeeded; and
a usage control unit configured to control a use of the provisional registration information according to a result of determining whether or not the provisional registration information satisfies a first condition.

According to a second aspect of the present disclosure, there is provided an authentication information management system including:
a registration terminal configured to receive first biometric information and a deposit of a predetermined amount of money from a user;
an authentication information management device; and
a payment terminal configured to receive second biometric information from a user who makes a payment.

The registration terminal transmits a provisional registration request including the first biometric information and a deposit amount to the authentication information management device, and
the authentication information management device registers provisional registration information in which a payment balance based on the deposit amount included in the provisional registration request received from the registration terminal has been associated with the first biometric information.

The payment terminal transmits a payment request including the second biometric information and a payment amount to the authentication information management device, and
the authentication information management device
controls first biometric authentication using the first biometric information for the second biometric information in response to the payment request received from the payment terminal,
pays the payment amount using the payment balance associated with the first biometric information in a case in which the first biometric authentication has succeeded, and
controls a use of the provisional registration information according to a result of determining whether or not the provisional registration information satisfies a first condition.

According to a third aspect of the present disclosure, there is provided an authentication information management method executed by a computer. The authentication information management method includes:
acquiring a provisional registration request including first biometric information of a user and a deposit amount;
registering provisional registration information in which a payment balance based on the deposit amount included in the provisional registration request has been associated with the first biometric information;
controlling first biometric authentication using the first biometric information for second biometric information in response to a payment request including the second biometric information and a payment amount;
paying the payment amount using the payment balance associated with the first biometric information in a case in which the first biometric authentication has succeeded; and
controlling a use of the provisional registration information according to a result of determining whether or not the provisional registration information satisfies a first condition.

According to a fourth aspect of the present disclosure, there is provided an authentication information management program causing a computer to execute:
a process of acquiring a provisional registration request including first biometric information of a user and a deposit amount;
a process of registering provisional registration information in which a payment balance based on the deposit amount included in the provisional registration request has been associated with the first biometric information;
a process of controlling first biometric authentication using the first biometric information for second biometric information in response to a payment request including the second biometric information and a payment amount;
a process of paying the payment amount using the payment balance associated with the first biometric information in a case in which the first biometric authentication has succeeded; and
a process of controlling a use of the provisional registration information according to a result of determining whether or not the provisional registration information satisfies a first condition.

### Advantageous Effects of Invention

According to the present disclosure, it is possible to provide an authentication information management device, an authentication information management system, an authentication information management method, and an authentication information management program that promote information registration for biometric authentication.

### Brief Description of Drawings

Fig. 1 is a block diagram showing a configuration of an authentication information management device according to a first example embodiment.
Fig. 2 is a flowchart showing a flow of an authentication information management method according to the first example embodiment.
Fig. 3 is a block diagram illustrating an overall configuration of an authentication information management system according to a second example embodiment.
Fig. 4 is a block diagram illustrating a configuration of an authentication terminal according to the second example embodiment.
Fig. 5 is a block diagram showing a configuration of an authentication information management device according to the second example embodiment.
Fig. 6 is a block diagram illustrating a configuration of an authentication device according to the second example embodiment.
Fig. 7 is a flowchart showing a flow of a face information registration process by a registration terminal according to the second example embodiment.
Fig. 8 is a flowchart showing a flow of a provisional registration process according to the second example embodiment.
Fig. 9 is a flowchart showing a flow of a definitive registration process according to the second example embodiment.
Fig. 10 is a flowchart showing a flow of a face information registration process by the authentication device according to the second example embodiment.
Fig. 11 is a flowchart showing a flow of a payment process by the authentication terminal according to the second example embodiment.
Fig. 12 is a flowchart showing a flow of a payment process by the authentication information management device according to the second example embodiment.
Fig. 13 is a flowchart illustrating a flow of a face authentication process performed by the authentication device according to the second example embodiment.
Fig. 14 is a flowchart showing a flow of a process corresponding to a provisional registration status which is performed by the authentication terminal according to the second example embodiment.
Fig. 15 is a flowchart showing a flow of a process corresponding to a provisional registration status inquiry which is performed by the authentication information management device according to the second example embodiment.
Fig. 16 is a diagram showing an example of the display of a provisional registration status display screen according to the second example embodiment.
Fig. 17 is a diagram showing an example of the display of a history of a cumulative deposit amount in the provisional registration status according to the second example embodiment.
Fig. 18 is a flowchart showing a flow of a process for a response corresponding to notification information which is performed by the authentication information management device according to the second example embodiment.
Fig. 19 is a block diagram illustrating an overall configuration of an authentication information management system according to a third example embodiment.
Fig. 20 is a block diagram showing a configuration of a user terminal according to the third example embodiment.
Fig. 21 is a block diagram showing a configuration of an authentication information management device according to the third example embodiment.
Fig. 22 is a flowchart showing a flow of a face information registration process by the user terminal according to the third example embodiment.
Fig. 23 is a flowchart showing a flow of a provisional registration process according to the third example embodiment.
Fig. 24 is a block diagram showing a configuration of a user terminal according to a fourth example embodiment.
Fig. 25 is a block diagram showing a configuration of an authentication information management device according to the fourth example embodiment.
Fig. 26 is a flowchart showing a flow of a face information registration process by the user terminal according to the fourth example embodiment.
Fig. 27 is a flowchart showing a flow of a provisional registration process according to the fourth example embodiment.

### Example Embodiment

Hereinafter, example embodiments of the present disclosure will be described in detail with reference to the drawings. In the drawings, the same or corresponding elements are denoted by the same reference numerals, and repeated description is omitted as necessary for clarity of description.

### <First Example Embodiment>

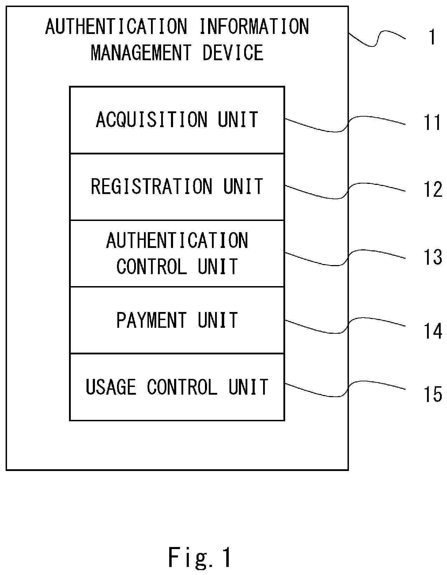

Fig. 1 is a block diagram showing a configuration of an authentication information management device 1 according to a first example embodiment. The authentication information management device 1 is an information processing device that manages authentication information (biometric information) in order to use a payment service based on biometric authentication. Here, the authentication information management device 1 may be connected to a predetermined terminal through a communication network (not shown; hereinafter, the communication network is also simply referred to as a network) or predetermined wireless communication. In addition, it does not matter whether the network is wired or wireless, and any type of communication protocol may be used. The terminal may perform input to the authentication information management device 1 and perform a process corresponding to an output from the authentication information management device 1. The terminal may be, for example, a registration terminal, an authentication terminal, or a payment terminal.

The authentication information management device 1 includes an acquisition unit 11, a registration unit 12, an authentication control unit 13, a payment unit 14, and a usage control unit 15. The acquisition unit 11 acquires a provisional registration request including first biometric information of a user and a deposit amount. The biometric information is data (feature amount) that is calculated from physical features unique to an individual, such a fingerprint, a voiceprint, a vein, a retina, and an iris pattern of the user. For example, the authentication information management device 1 may directly acquire the biometric information from the user and may receive a deposit of cash. In addition, the authentication information management device 1 may acquire the biometric information from the user through a biometric information acquisition device such as a camera. Further, in a case in which the user deposits cash into the authentication information management device 1, the acquisition unit 11 acquires the received deposit of cash. Furthermore, the deposit amount is not limited to cash and may be the amount of electronic money remitted (the amount of money deposited into the account of the authentication information management device 1). In these cases, the authentication information management device 1 issues a provisional registration request including the acquired biometric information and the received deposit amount. The acquisition unit 11 acquires the provisional registration request issued inside. Alternatively, in a case in which the above-described registration terminal acquires the biometric information of the user and receives the deposit of cash, the registration terminal may issue a provisional registration request including the biometric information and the deposit amount and transmit the provisional registration request to the authentication information management device 1. In this case, the acquisition unit 11 acquires the provisional registration request from the registration terminal.

The registration unit 12 registers provisional registration information in which a payment balance based on the deposit amount included in the provisional registration request has been associated with the first biometric information. The registration unit 12 may calculate the payment balance as the amount of money that can be used for later payment, on the basis of the deposit amount included in the provisional registration request. For example, the registration unit 12 may add a predetermined amount of money to the deposit amount to calculate the payment balance. Alternatively, the registration unit 12 may set the deposit amount as the payment balance. The registration unit 12 stores the provisional registration information in which the payment balance and the first biometric information have been associated with each other in a storage device (not shown) inside or outside the authentication information management device 1. In addition, the provisional registration information is not limited to the case in which the payment balance and the first biometric information have been directly associated with each other. The payment balance and the first biometric information may be indirectly associated with each other. For example, a first storage device may store information in which the payment balance and a user ID have been associated with each other, and a second storage device may store information in which the user ID and the first biometric information have been associated with each other. In this case, it can be said that the payment balance and the first biometric information have been associated with each other in the provisional registration information in a storage system obtained by combining the first storage device and the second storage device.

The authentication control unit 13 controls (first) biometric authentication using the first biometric information for second biometric information in response to a payment request including the second biometric information and a payment amount. The second biometric information is biometric information acquired from a user who makes a payment. For example, the authentication information management device 1 may directly acquire the second biometric information from the user who will make a payment and issue a payment request including the payment amount to be paid and the second biometric information. Alternatively, the payment terminal may acquire the second biometric information from the user who will make a payment and transmit a payment request including the payment amount to be paid and the second biometric information to the authentication information management device 1. In these cases, the authentication control unit 13 controls biometric authentication in response to the payment request issued inside or the payment request received from the payment terminal. The authentication control unit 13 controls biometric authentication using the second biometric information included in the payment request and the first biometric information included in the provisional registration information. In addition, in a case in which the authentication information management device 1 is provided with the above-described storage device, the authentication control unit 13 performs biometric information collation to perform a biometric authentication process. Alternatively, in a case in which the biometric information is stored in an external authentication device, the authentication control unit 13 directs the authentication device to perform the biometric authentication process and acquires an authentication result.

In a case in which the (first) biometric authentication by the authentication control unit 13 has succeeded, the payment unit 14 pays the payment amount included in the payment request, using the payment balance associated with the first biometric information in the provisional registration information. For example, the payment unit 14 updates the payment balance in the provisional registration information with the amount of money obtained by subtracting the payment amount from the payment balance.

The usage control unit 15 controls the use of the provisional registration information according to the result of determining whether or not the provisional registration information satisfies a first condition. The first condition is a usage restriction condition for the provisional registration information. In particular, the usage control unit 15 may restrict the use of the provisional registration information in a case in which the provisional registration information satisfies the first condition. Specifically, the usage control unit 15 restricts the use of the provisional registration information that satisfies the first condition in the biometric authentication by the authentication control unit 13. That is, in a case in which the first condition is satisfied, the authentication control unit 13 is not capable of controlling the biometric authentication using the first biometric information. Alternatively, the usage control unit 15 restricts the use of the provisional registration information that satisfies the first condition in the payment by the payment unit 14. That is, in a case in which the first condition is satisfied, the payment unit 14 is not capable of performing payment using the payment balance associated with the first biometric information. Therefore, even when the user who will make a payment has registered the provisional registration information including the first biometric information and the deposit amount in the authentication information management device 1 in advance, the user who will make a payment is restricted from using the payment service based on biometric authentication in a case in which the provisional registration information satisfies the first condition. On the other hand, in a case in which the provisional registration information does not satisfy the first condition, the usage control unit 15 enables the use of the provisional registration information or permits the use of the provisional registration information. In addition, it can be said that the case in which the first condition is not satisfied is a case in which an available condition for the provisional registration information is satisfied.

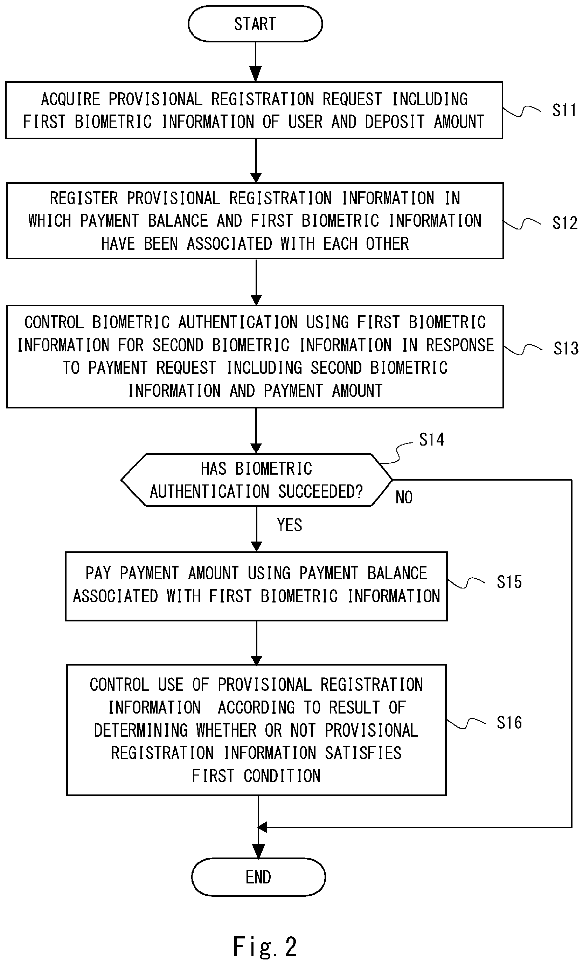

Fig. 2 is a flowchart showing a flow of an authentication information management method according to the first example embodiment. First, the acquisition unit 11 acquires the provisional registration request including the first biometric information of the user and the deposit amount (S11). Then, the registration unit 12 registers the provisional registration information in which the payment balance based on the deposit amount included in the provisional registration request acquired in Step S11 has been associated with the first biometric information (S12).

Then, the authentication information management device 1 receives the payment request including the second biometric information and the payment amount. In this case, the authentication control unit 13 controls (first) biometric authentication using the first biometric information for the second biometric information, in response to the payment request (S13). Then, the payment unit 14 determines whether or not the biometric authentication in Step S13 has succeeded (S14). In a case in which the (first) biometric authentication in Step S13 has succeeded, the payment unit 14 pays the payment amount, using the payment balance associated with the first biometric information (S15).

Then, the usage control unit 15 controls the use of the provisional registration information according to the result of determining whether or not the provisional registration information satisfies the first condition (S16). On the other hand, in a case in which the biometric authentication in Step S13 has failed, the process ends. Alternatively, in this case, the authentication control unit 13 may transmit a message indicating that the biometric authentication has failed to the source of the request. Further, the determination for the first condition in Step S16 may be performed before the biometric authentication in Step S13 or before the payment in Step S15. In other words, in a case in which the provisional registration information does not satisfy the first condition, the use of the provisional registration information is restricted in the biometric authentication in Step S13 and the payment in Step S15. Meanwhile, in a case in which the provisional registration information satisfies the first condition, the use of the provisional registration information may be permitted in the biometric authentication in Step S13 and the payment in Step S15.

As described above, in this example embodiment, the user does not need to register payment information that can be used for a wide range of deferred payment for the trial use of the payment service based on biometric authentication and deposits the amount of money that can be paid in advance (prepaid), which makes it possible to reduce concern about pre-registration. In addition, the use of the provisional registration information is controlled according to the result of determining whether or not the provisional registration information satisfies a predetermined condition. For example, since the use of the provisional registration information that satisfies the predetermined conditions is restricted, unexpected use is also suppressed. Further, since the registration content of the provisional registration information is more limited than that of definitive registration information, a registration procedure is simplified. From the above, it is possible to promote information registration for biometric authentication used for the payment service. Since the information registration for biometric authentication is promoted, it is possible to provide various biometric authentication services and to improve the added value of the services.

In addition, the authentication information management device 1 includes a processor, a memory, and a storage device as components (not shown). Furthermore, the storage device stores a computer program in which the process of the authentication information management method according to this example embodiment is implemented. Then, the processor reads the computer program from the storage device into the memory and executes the computer program. As a result, the processor implements the functions of the acquisition unit 11, the registration unit 12, the authentication control unit 13, the payment unit 14, and the usage control unit 15.

Alternatively, each of the acquisition unit 11, the registration unit 12, the authentication control unit 13, the payment unit 14, and the usage control unit 15 may be implemented by dedicated hardware. In addition, some or all of the components of each device may be implemented by, for example, a general-purpose or dedicated circuitry, a processor, or a combination thereof. These may be configured by a single chip or may be configured by a plurality of chips that are connected to each other through a bus. Some or all of the components of each device may be implemented by, for example, a combination of the above-described circuit and a program. Furthermore, for example, a central processing unit (CPU), a graphics processing unit (GPU), a field-programmable gate array (FPGA), or a quantum processor (quantum computer control chip) can be used as the processor.

In addition, in a case in which some or all of the components of the authentication information management device 1 are implemented by a plurality of information processing devices, circuits, or the like, the plurality of information processing devices, circuits, or the like may be disposed so as to be concentrated or distributed. For example, the information processing device, the circuit, and the like may be implemented as a form, such as a client-server system or a cloud computing system, in which each device is connected through a communication network. Further, the functions of the authentication information management device 1 may be provided in a software as a service (SaaS) format.

### <Second Example Embodiment>

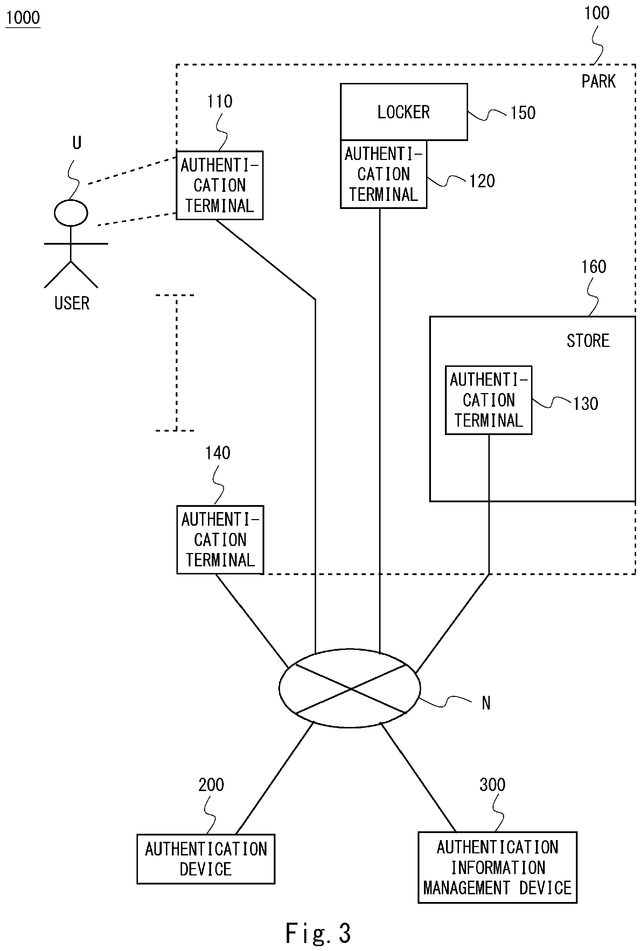

A second example embodiment is a specific example of the first example embodiment. Fig. 3 is a block diagram illustrating an overall configuration of an authentication information management system 1000 according to the second example embodiment. The authentication information management system 1000 is an information system that manages authentication information (face information) for using the payment service based on face authentication through a plurality of authentication terminals installed in a predetermined area. In particular, in the authentication information management system 1000, a park 100 is given as an example of the predetermined area. However, the predetermined area may be, for example, an event venue or a commercial facility. Further, the predetermined area may include a plurality of venues and facilities.

In addition, in the following description, face authentication, which is an example of the biometric authentication, is used as authentication for personal identification, and facial feature information, which is an example of the biometric information, is used as personal identification information. However, other techniques using captured images can be applied as the biometric authentication and the biometric information. For example, data (feature amount) that is calculated from physical features unique to an individual, such a fingerprint, a voiceprint, a vein, a retina, and an iris pattern of a pupil, may be used as the biometric information. Further, the authentication for personal identification may be any authentication other than the biometric authentication, and the personal identification information may be any information other than the biometric information. For example, a combination of an ID and a password, an electronic certificate, or a two-dimensional code is given as an example of the personal identification information, but the personal identification information is not limited thereto.

The authentication information management system 1000 includes authentication terminals 110 to 140, a locker 150, a store 160, an authentication device 200, and an authentication information management device 300. The authentication terminals 110 to 140, the authentication device 200, and the authentication information management device 300 are connected through the network N. Here, the network N is a wired or wireless communication line, for example, the Internet. It is assumed that the authentication terminals 110 to 140, the locker 150, and the store 160 are installed in the park 100. The authentication device 200 and the authentication information management device 300 may be installed anywhere. In addition, the locker 150 and the store 160 are examples of the facility where the payment service based on face authentication is available. Further, examples of the facility where the payment service based on the face authentication is available include a payment machine for rental goods, a vending machine, a museum, a zoo, and an event venue. However, the facility is not limited thereto.

The authentication information management system 1000 is used, for example, as follows. A user U deposits a predetermined amount of cash into the authentication terminal 110 that is installed at the entrance of the park 100 for the provisional use (trial use) of various payment services based on face authentication in the park 100. Further, the user U captures a face image of the user using the authentication terminal 110 and provisionally registers the face image and the deposit amount in the authentication information management device 300. Here, since the type of the registration is the provisional registration, a privilege may be granted to the user U. For example, the authentication information management device 300 may add a privilege amount to the amount of money deposited by the user U to calculate the amount of money that can be paid (payment balance). In addition, the authentication information management device 300 may hold a provisional registration history for each user and grant a privilege in a case in which the number of provisional registrations is equal to or less than a predetermined number of times. Then, the user U enters the park 100 and makes a payment using face authentication when using the paid locker 150 or purchasing products at the store 160 in the park 100. In this case, the payment balance based on the amount of money deposited in advance is used for payment. Further, when the user U has succeeded in the face authentication with the authentication terminal 140 installed at the exit of the park 100, the user U can delete, for example, the provisionally registered face image. In addition, the user U may perform definitive registration including the face image, personal information, and payment information, in order to permanently use various payment services based on face authentication. Alternatively, for example, the user U may continue (extend) the provisional registration and deposit the additional amount of money. Further, in a case in which the same user performs the provisional registration many times, the privilege may not be granted. Furthermore, at the time of the definitive registration, a special privilege may be granted separately. Moreover, an example of the use of the authentication information management system 1000 is not limited to these.

The authentication terminal 110 is an example of the registration terminal. The authentication terminal 110 is an information terminal that is installed at the entrance of the park 100. The authentication terminal 110 performs registration processes corresponding to the provisional registration (first registration type) and the definitive registration (second registration type) for the authentication information management device 300.

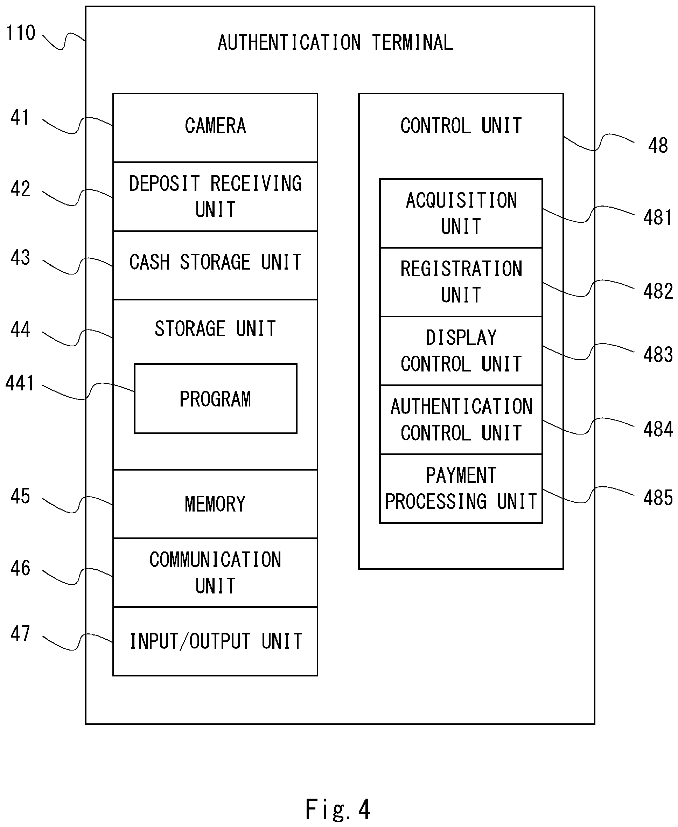

Fig. 4 is a block diagram showing a configuration of the authentication terminal 110 according to the second example embodiment. The authentication terminal 110 includes a camera 41, a deposit receiving unit 42, a cash storage unit 43, a storage unit 44, a memory 45, a communication unit 46, an input/output unit 47, and a control unit 48.

The camera 41 is an imaging device that images the user U under the control of the control unit 48. The deposit receiving unit 42 receives cash which is banknotes and coins deposited from the user U and stores the cash in the cash storage unit 43. In addition, the deposit receiving unit 42 counts the deposited cash and notifies the control unit 48 of the deposit amount. The cash storage unit 43 is an area for storing banknotes and coins. The storage unit 44 is a storage device that stores a program 441 for implementing each function of the authentication terminal 110. The program 441 is a computer program in which at least a face information registration process, a provisional registration status inquiry process, and the like are implemented. The memory 45 is a volatile storage device, such as a random access memory (RAM), and is a storage area for temporarily holding information during the operation of the control unit 48. The communication unit 46 is a communication interface with the network N. The input/output unit 47 includes a display device and an input device. The input/output unit 47 is, for example, a touch panel. The control unit 48 is a processor that controls hardware included in the authentication terminal 110. The control unit 48 reads the program 441 from the storage unit 44 into the memory 45 and executes the program 441. Therefore, the control unit 48 implements the functions of an acquisition unit 481, a registration unit 482, a display control unit 483, an authentication control unit 484, and a payment processing unit 485.

The acquisition unit 481 receives the selection of the registration type from the user U. In addition, the acquisition unit 481 controls the camera 41 such that a region including the face of the user U is imaged and acquires the image as the face image. Further, in a case in which the registration type is the provisional registration, the acquisition unit 481 acquires the deposit amount sent from the deposit receiving unit 42. Furthermore, in a case in which the registration type is the definitive registration, the acquisition unit 481 requests the user U to input personal information and payment information and acquires the input personal information and payment information. Here, examples of the personal information include the name, address, birth date, and gender of the user U. Examples of the payment information include account information of a financial institution from which a payment amount is withdrawn during payment for various payment services using face authentication and credit card information used for paying the payment amount. In addition, the acquisition unit 481 may acquire the payment amount input from, for example, the staff of the park 100.

In a case in which the registration type is the provisional registration, the registration unit 482 transmits the provisional registration request including the face image and the deposit amount to the authentication information management device 300. Further, in a case in which the registration type is the definitive registration, the registration unit 482 transmits the definitive registration request including the face image, the personal information, and the payment information to the authentication information management device 300.

The display control unit 483 displays a receiving screen and various types of notification information received from the authentication information management device 300 on the input/output unit 47. The receiving screen is a screen for receiving registration for use of various payment services based on face authentication (an operation of selecting the registration type and input information such as personal information) and an operation of selecting a provisional registration status inquiry. In addition, it is assumed that the provisional registration status includes the payment balance included in the provisional registration information. Therefore, the provisional registration status inquiry may also be called a balance inquiry. Further, details of the provisional registration status will be described below. Furthermore, the display control unit 483 displays, on the screen, request messages for transition to the definitive registration, the deposit of additional amount of money, continuation of the provisional registration, and the like, a confirmation message for the deletion of the provisional registration, selection buttons for these, and the like. In addition, the display control unit 483 receives the input (for example, selection and input information) of the user U on the screen and notifies the control unit 48 of the content of the selection and the content of the input.

The authentication control unit 484 transmits a provisional registration status inquiry request including the face image to the authentication information management device 300 when the provisional registration status inquiry is selected. Further, the authentication control unit 484 may transmit a face authentication request including the face image to the authentication information management device 300 or the authentication device 200. In other words, the authentication control unit 484 controls face authentication for the user U. In addition, the authentication control unit 484 transmits various processing requests corresponding to the notification from the display control unit 483 to the authentication information management device 300.

The payment processing unit 485 transmits a payment request including the face image and the payment amount to the authentication information management device 300 in order to pay a predetermined payment amount using the payment service based on face authentication. Since the authentication terminal 110 is a terminal installed at the entrance of the park 100, the payment amount may be a fee for entrance to the park 100.

In addition, since the authentication terminal 110 is at least the registration terminal, the authentication terminal 110 may include at least the acquisition unit 481, the registration unit 482, and the display control unit 483 of the control unit 48. In other words, the registration terminal does not necessarily include the authentication control unit 484 and the payment processing unit 485.

Further, the authentication terminals 120 to 140 have the same configuration as that shown in Fig. 4. The authentication terminals 120 and 130 are examples of the payment terminal. Therefore, each of the authentication terminals 120 and 130 may include at least the acquisition unit 481, the display control unit 483, the authentication control unit 484, and the payment processing unit 485 of the control unit 48. Furthermore, the authentication terminal 140 is an authentication terminal that is installed at the exit of the park 100. Therefore, the authentication terminal 140 may include at least the acquisition unit 481, the display control unit 483, and the authentication control unit 484 of the control unit 48.

Returning to Fig. 3, the description will continue. The authentication terminal 120 is an information terminal that is connected so as to be operatively associated with the opening and closing of the paid locker 150. For example, the user U puts luggage into an empty space in the locker 150, closes the door of the locker 150, and inputs a locker number and the like to the authentication terminal 120. The authentication terminal 120 acquires the face image of the user U and transmits the face authentication request including the face image to the authentication information management device 300. Then, in a case in which the user U has succeeded in the face authentication, the authentication terminal 120 locks the door of the locker corresponding to the locker number. Further, in a case in which the user U performs an operation of unlocking the door of the locker, the authentication terminal 120 acquires the face image of the user U and transmits the face authentication request including the face image (a payment request for a usage fee) to the authentication information management device 300. Then, in a case in which the user U has succeeded in the face authentication and the usage fee for the locker 150 has been paid, the authentication terminal 120 unlocks a predetermined locker 150. In addition, the payment for the usage fee may be made when the locker is locked.

The authentication terminal 130 is an information terminal that is installed inside the store 160. The authentication terminal 130 is, for example, a cash register terminal. For example, the user U scans a product code (payment amount or the like) of a product with a scanner that is connected to the authentication terminal 130 in order to purchase the product. Alternatively, a clerk of the store 160 may input the payment amount to the authentication terminal 130 using, for example, the scanner or input buttons. The authentication terminal 130 receives the scanned payment amount, acquires the face image of the user U, and transmits the payment request including the face image and the payment amount to the authentication information management device 300. Then, in a case in which the user U has succeeded in the face authentication and the payment amount has been paid, the authentication terminal 130 displays the payment balance of the user U. In addition, the authentication terminal 130 displays various types of notification information which will be described below.

The authentication terminal 140 is an information terminal that is installed at the exit of the park 100. In addition, the authentication terminal 140 may be installed in any place, for example, near the entrance of a restroom or near a bench in the park 100. The authentication terminal 140 acquires the face image of the user U and transmits the provisional registration status inquiry request including the face image to the authentication information management device 300. Then, in a case in which the user U has succeeded in the face authentication, the authentication terminal 140 receives the payment balance of the user U and various types of notification information and displays the payment balance and various types of notification information. The authentication terminal 140 may receive a selection operation and input information corresponding to the notification information from the user U. In this case, the authentication terminal 140 transmits various processing requests corresponding to the content of the selection and the input information to the authentication information management device 300. Then, the authentication terminal 140 receives the processing result from the authentication information management device 300 and displays the processing result. In addition, the authentication terminals 110, 120, and 130 may also issue the above-described provisional registration status inquiry request and various processing requests.

The authentication information management device 300 is an example of the authentication information management device 1. The authentication information management device 300 is an information processing device that performs, for example, the provisional registration and the definitive registration of face information, the update of the provisional registration history, a payment process based on face authentication, a provisional registration status inquiry process, the extension and deletion of the provisional registration, and a process corresponding to the deposit of additional amount of money (a process of the authentication information management method). The authentication information management device 300 may be redundant in a plurality of servers, and each functional block may be implemented by a plurality of computers.

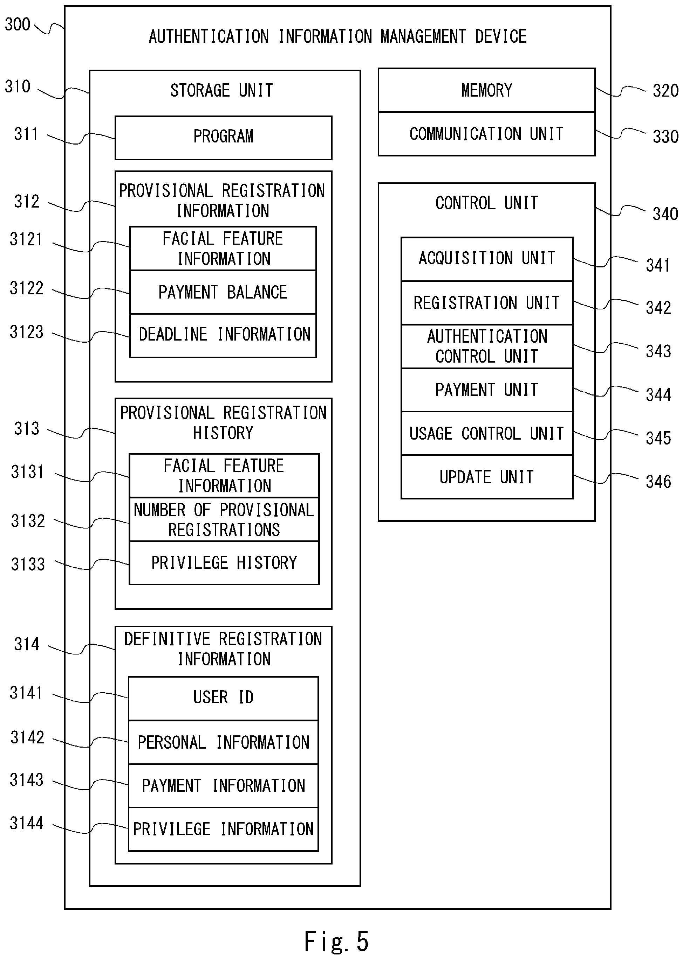

Next, the authentication information management device 300 will be described in detail. Fig. 5 is a block diagram showing a configuration of the authentication information management device 300 according to the second example embodiment. The authentication information management device 300 includes a storage unit 310, a memory 320, a communication unit 330, and a control unit 340. The storage unit 310 is an example of a storage device such as a hard disk or a flash memory. The storage unit 310 stores a program 311, provisional registration information 312, a provisional registration history 313, and definitive registration information 314. The program 311 is a computer program in which the process of the authentication information management method according to the second example embodiment is implemented.

The provisional registration information 312 is information in which facial feature information 3121, a payment balance 3122, and deadline information 3123 have been associated with one another. The facial feature information 3121 is a set of feature points extracted from the face image. The payment balance 3122 is the amount of money that can be used for payment in the payment service based on face authentication. The deadline information 3123 is information for determining the expiration date of the provisional registration information 312. Examples of the deadline information 3123 include the registration date and time, the available period, and the expiration date and time of the available period (expiration date and time) of the provisional registration information 312.

The provisional registration history 313 is information for managing the registration history of the provisional registration information 312. The provisional registration history 313 is information in which facial feature information 3131, the number of provisional registrations 3132, and a privilege history 3133 have been associated with one another. The facial feature information 3131 is information equivalent to the facial feature information 3121. The number of provisional registrations 3132 is the number of times the user corresponding to the facial feature information 3131 registers the provisional registration information. In addition, for the number of provisional registrations 3132, the number of registrations may be increased even in a case in which the deadline for the provisional registration information is extended. The privilege history 3133 is a history of privilege information given to the user corresponding to the facial feature information 3131. Examples of the privilege information include the amount of money and points. The points are information having a pseudo-monetary value that can be exchanged for goods or services. Alternatively, the privilege information may be, for example, an electronic coupon, electronic money, a cryptographic asset, or an electronic ticket, in addition to the points. In other words, the privilege information is electronic data indicating economic value and includes information that has monetary value equivalent to currency and information that has pseudo-monetary value. The privilege history 3133 is a cumulative value of the privilege information given to the same user. For example, in a case in which the privilege information is the amount of money, the privilege history 3133 is the total amount of money given as a privilege to the user corresponding to the facial feature information 3131. Furthermore, the provisional registration history 313 may include the provisional registration date and time of each provisional registration. Alternatively, the provisional registration history 313 may be information in which the facial feature information and the provisional registration date and time of each provisional registration have been associated with each other. Moreover, the provisional registration history 313 may include a history of the deposit amount. For example, the provisional registration history 313 may be a set of a deposit date and a deposit amount or may be the cumulative total of the deposit amount.

The definitive registration information 314 is information in which a user ID 3141, personal information 3142, payment information 3143, and privilege information 3144 have been associated with one another. The user ID 3141 is user identification information that is managed in association with the facial feature information managed in the authentication device 200 which will be described below. Therefore, it can be said that the definitive registration information 314 is information that can uniquely specify the facial feature information through the user ID 3141 and in which the facial feature information, the personal information 3142, the payment information 3143, and the privilege information 3144 have been substantially associated with one another. Examples of the personal information 3142 include the name, address, birth date, and gender of the user. Examples of the payment information 3143 include account information of a financial institution from which a payment amount is withdrawn during payment for various payment services based on face authentication and credit card information used for paying the payment amount. The privilege information 3144 is the above-described privilege information and is privilege information that is given according to various types of payments during the definitive registration or after the definitive registration.

The memory 320 is a volatile storage device, such as a random access memory (RAM), and is a storage area for temporarily holding information during the operation of the control unit 340. The communication unit 330 is a communication interface with the network N.

The control unit 340 is a processor, that is, a control device that controls each configuration of the authentication information management device 300. The control unit 340 reads the program 311 from the storage unit 310 into the memory 320 and executes the program 311. Therefore, the control unit 340 implements the functions of an acquisition unit 341, a registration unit 342, an authentication control unit 343, a payment unit 344, a usage control unit 345, and an update unit 346.

The acquisition unit 341 is an example of the acquisition unit 11. The acquisition unit 341 receives (acquires), for example, a provisional registration request, a definitive registration request, a payment request, an additional deposit request, a provisional registration status inquiry request, a provisional registration continuation and deletion request, a request for transition from the provisional registration to the definitive registration (definitive registration transition request), and a payment balance update request from the authentication terminals 110 to 140.

The registration unit 342 is an example of the registration unit 12. The registration unit 342 generates the provisional registration information 312 and the provisional registration history 313 in response to the provisional registration request and registers them in the storage unit 310. In particular, in a case in which the information included in the provisional registration request satisfies a second condition, the registration unit 342 may register the provisional registration information 312 to which predetermined privilege information has been given. Here, an example of the second condition is that facial feature information based on the face image included in the provisional registration request has not been registered in the provisional registration information 312. Alternatively, an example of the second condition is that, even in a case in which the facial feature information based on the face image included in the provisional registration request has been registered in the provisional registration information 312, the number of provisional registrations 3132 is equal to or less than a predetermined number of times or the privilege history 3133 is equal to or less than a predetermined value. Alternatively, the second condition may be that the number of times the privilege information is given is equal to or less than an upper limit, that a predetermined period has not elapsed since the first provisional registration date of the user, and that the total privilege amount in the privilege history 3133 is equal to or less than a predetermined amount of money. Further, in a case in which the predetermined number of times is 1, that is, in a case in which a privilege is granted to a specific user only for the first provisional registration request, in the provisional registration history 313, only the facial feature information 3131 may be managed, and the number of provisional registrations 3132 and the privilege history 3133 may be unnecessary. However, the second condition is not limited to these.

Moreover, the privilege information may be given as follows. For example, in a case in which the privilege information is a predetermined amount of money (privilege amount), the registration unit 342 may give the privilege information by adding the privilege amount to the deposit amount included in the provisional registration request to calculate the payment balance. Alternatively, in a case in which the privilege information is, for example, the above-described points other than the amount of money, the registration unit 342 may give a predetermined number of points as the privilege information and include the given privilege information in the provisional registration information 312. The given points may be used at the time of payment based on face authentication.

In addition, registration in the provisional registration history may be performed as follows. For example, in accordance with the registration of the provisional registration information 312, the registration unit 342 sets the facial feature information 3121 as the facial feature information 313 1, adds "1" to the number of provisional registrations 3132, adds the given privilege information to the privilege history 3133, and registers them in the provisional registration history 313. Then, the registration unit 342 gives the privilege information in a case in which the provisional registration history 313, which corresponds to the biometric information (facial feature information) included in the subsequent provisional registration request acquired after the registration of the provisional registration information 312, satisfies the second condition.

Alternatively, in the provisional registration history 313, either the number of provisional registrations 3132 or the privilege history 3133 may be unnecessary. That is, the registration unit 342 registers, in the provisional registration history, the number of times the user U makes the provisional registration request (the number of provisional registrations 3132) or the cumulative value of the given privilege information (privilege history 3133). Then, in a case in which the subsequent provisional registration request is acquired and the number of requests is equal to or less than a predetermined number of times or the cumulative value is equal to or less than a predetermined value, the registration unit 342 may determine that the second condition is satisfied.

In addition, in a case in which the acquisition unit 341 acquires the provisional registration request, but the second condition is not satisfied, the registration unit 342 may not perform the provisional registration. For example, the following configuration may be used: the user U is granted a privilege up to three provisional registrations, and the provisional registration is disabled when the total privilege amount exceeds an upper limit of several thousand yen. Furthermore, in a case in which the second condition is not satisfied, the registration unit 342 may transmit a definitive registration transition request (which will be described below) to the source of the request.

In addition, in a case in which the acquisition unit 341 acquires the definitive registration request, the registration unit 342 generates the definitive registration information 314 and registers it in the storage unit 310. Specifically, the registration unit 342 transmits, to the authentication device 200, a face information registration request that includes the face image included in the definitive registration request. Then, the registration unit 342 acquires the user ID which has been issued from the authentication device 200 according to the registration of the face information. Then, the registration unit 342 associates the personal information 3142 and the payment information 3143 included in the definitive registration request with the acquired user ID 3141 to generate the definitive registration information 314. At this time, the registration unit 342 may give the privilege information 3144 to generate the definitive registration information 314. For example, the registration unit 342 may give the privilege information 3144 in a case in which the user U requests the definitive registration request without performing the provisional registration. In other words, it is not essential to grant a privilege at the time of the definitive registration. That is, the registration unit 342 may register the definitive registration information, to which predetermined privilege information has been given, in a case in which the user did not request the provisional registration in the past. For example, the registration unit 342 extracts facial feature information from the face image included in the definitive registration request and collates the extracted facial feature information with the facial feature information 3131 in the provisional registration history 313. Then, in a case in which there is no facial feature information that has a degree of matching equal to or greater than a threshold value in the collation of the facial feature information, the registration unit 342 may determine that the user did not request the provisional registration in the past.

Further, in a case in which the acquisition unit 341 acquires the definitive registration transition request, the registration unit 342 generates the definitive registration information 314 as described above and registers it in the storage unit 310. In addition, the registration unit 342 may specify the corresponding provisional registration information 312 from the definitive registration transition request and transmit the face information registration request including the facial feature information 3121 included in the provisional registration information 312. In other words, the provisionally registered biometric information may be used for the definitive registration. In addition, in the case of the definitive registration transition request, the registration unit 342 may give the privilege information 3144 to generate the definitive registration information 314.

The authentication control unit 343 is an example of the authentication control unit 13. In a case in which the acquisition unit 341 acquires the payment request or the provisional registration status inquiry request, the authentication control unit 343 controls face authentication using the facial feature information 3121 included in the provisional registration information 312. In addition, in a case in which the acquisition unit 341 acquires various processing requests other than the provisional registration request and the definitive registration request, the authentication control unit 343 may similarly control face authentication using the facial feature information 3121 included in the provisional registration information 312. Specifically, the authentication control unit 343 extracts (calculates) facial feature information from the face image included in the request, collates the extracted facial feature information with the facial feature information 3121 included in the provisional registration information 312, and calculates the degree of matching therebetween. In a case in which the degree of matching is equal to or greater than a threshold value, the authentication control unit 343 determines that the face authentication (of the provisional registration information) has succeeded. On the other hand, in a case in which the degree of matching is less than the threshold value, the authentication control unit 343 directs the authentication device 200 to perform face authentication for the face image included in the request. For example, the authentication control unit 343 transmits the face authentication request including the face image to the authentication device 200 through the network N and receives a face authentication result from the authentication device 200. In addition, the authentication control unit 343 may detect a face region of the user from the face image and include an image of the face region in the face authentication request. Alternatively, the authentication control unit 343 may extract facial feature information from the face region and include the facial feature information in the face authentication request. In addition, the authentication control unit 343 determines whether the face authentication has succeeded or failed from the received face authentication result. In a case in which the face authentication result shows success, the authentication control unit 343 determines that the face authentication (of the definitive registration information) has succeeded and specifies the user ID included in the face authentication result. Alternatively, in a case in which the request includes a session ID which will be described below, the authentication control unit 343 may specify (identify) the provisional registration information 312 and the definitive registration information 314 successfully specified by the face authentication corresponding to the session ID which has been previously performed. In addition, the authentication control unit 343 may perform control such that the provisional registration information 312 whose use has been restricted by the usage control unit 345 is not available when biometric authentication is controlled. In other words, the authentication control unit 343 may perform control such that the provisional registration information 312 whose use has been restricted by the usage control unit 345 is not set as an object to be collated in biometric authentication.

The payment unit 344 is an example of the payment unit 14. In a case in which the face authentication of the provisional registration information based on the payment request has succeeded, the payment unit 344 determines whether or not the payment balance of the user who has succeeded in the face authentication is equal to or greater than the payment amount included in the payment request. In other words, the payment unit 344 determines whether or not the payment balance is insufficient with respect to the payment amount. In a case in which the payment balance is equal to or greater than the payment amount, the payment unit 344 pays the payment amount, using the payment balance 3122 of the provisional registration information 312. Specifically, the payment unit 344 subtracts the payment amount from the payment balance to update the provisional registration information 312. In addition, in a case in which the privilege information is, for example, points, the payment unit 344 may subtract the amount of money corresponding to the monetary value indicated by the points from the payment amount to calculate the payment amount. On the other hand, in a case in which the payment balance is less than the payment amount, that is, in a case in which the payment balance is insufficient with respect to the payment amount, the payment unit 344 notifies the source of the payment request (payment terminal) of a shortage. In a case in which an additional deposit amount is received from the source of the request, the payment unit 344 pays the payment amount using the payment balance and the additional deposit amount. In addition, the payment unit 344 may perform control such that the payment balance of the provisional registration information 312 whose use has been restricted by the usage control unit 345 is not available during payment.

The usage control unit 345 is an example of the usage control unit 15. The usage control unit 345 determines whether or not the provisional registration information 312 satisfies the first condition (a usage restriction condition for the provisional registration information) and restricts the use of the provisional registration information 312 in a case in which the provisional registration information 312 satisfies the first condition. Here, the first condition is, for example, that a predetermined period (several days, one week, or the like) has elapsed since the registration of the provisional registration information, that a predetermined time (after business hours of the day or the like) comes, and that the payment balance after payment is equal to or less than a predetermined amount of money. Furthermore, the first condition may be that the payment balance is equal to or less than a predetermined amount of money at a predetermined time. For example, the usage control unit 345 determines whether or not the deadline information 3123 in the provisional registration information 312 shows that the expiration date of the provisional registration information has passed at any time. Specifically, in a case in which the deadline information 3123 is the provisional registration date and time and a predetermined period has elapsed since the provisional registration date and time, the usage control unit 345 determines that the provisional registration information 312 satisfies the first condition. Specifically, in a case in which the deadline information 3123 is the available period and the available period has expired, the usage control unit 345 determines that the provisional registration information 312 satisfies the first condition. Specifically, in a case in which the deadline information 3123 is the expiration date and time of the available period and the current date and time is later than the expiration date and time, the usage control unit 345 determines that the provisional registration information 312 satisfies the first condition.

Alternatively, the usage control unit 345 may determine that the provisional registration information 312 satisfies the first condition in a case in which a predetermined time comes, for example, after business hours of the day. In this case, the usage control unit 345 may delete all of the provisional registration information 312 stored in the storage unit 310.

Further, the usage control unit 345 may determine that the provisional registration information, in which a predetermined time comes and the payment balance is equal to or less than a predetermined amount of money, satisfies the first condition. Alternatively, the usage control unit 345 may determine that the provisional registration information, in which the payment balance is equal to or less than a predetermined amount of money after payment by the payment unit 344, satisfies the first condition.

Then, in a case in which the provisional registration information 312 satisfies the first condition, the usage control unit 345 deletes the corresponding provisional registration information 312 from the storage unit 310. Therefore, it can be said that the usage control unit 345 restricts the use of the corresponding provisional registration information 312 in the face authentication of the provisional registration information by the authentication control unit 343. Alternatively, the usage control unit 345 may set a flag indicating "unavailable" in the provisional registration information 312. In this case, the authentication control unit 343 performs control such that the facial feature information 3121 in the provisional registration information 312, in which the flag indicating "unavailable" has been set, is not available in the face authentication of the provisional registration information. Alternatively, the payment unit 344 may perform control such that the payment balance 3122 in the provisional registration information 312, in which the flag indicating "unavailable" has been set, is not available in the payment process.

In a case in which the provisional registration information satisfies a third condition, the update unit 346 notifies the corresponding user of the fact and updates the provisional registration information on the basis of a response from the user. Here, it can be said that the third condition is, for example, at least one of a condition for notifying the user, a condition for extending the deadline for the provisional registration, a condition for updating the provisional registration information, and a condition for transition to the definitive registration. For example, the third condition is that a predetermined period has elapsed since the provisional registration, that the payment balance is equal to or less than a predetermined amount of money, that a predetermined period is left until the expiration of the deadline for the provisional registration information, that the number of provisional registrations exceeds a predetermined number of times, that the privilege history exceeds a predetermined value, and that the provisional registration status inquiry request is received.

In addition, in a case in which the acquisition unit 341 acquires the provisional registration status inquiry request, the update unit 346 notifies the authentication terminal, which is the source of the request, of the fact. Alternatively, in a case in which the acquisition unit 341 acquires the provisional registration status inquiry request, the update unit 346 determines whether or not the provisional registration information satisfies the third condition except for the provisional registration status inquiry request and notifies the authentication terminal of the fact based on the determination result. Further, following the payment by the payment unit 344, the update unit 346 may determine whether or not the third condition is satisfied. In a case in which the third condition is satisfied, the update unit 346 may notify the payment terminal of the fact. In these cases, since the user (who has succeeded in the face authentication of the provisional registration information) is in front of the authentication terminal or the payment terminal, it can be said that the notification by the update unit 346 to the source of the request is notification to the user.

In addition, the notification information notified by the update unit 346 may include, for example, that a predetermined period has elapsed since the provisional registration, that the payment balance is equal to or less than a predetermined amount of money, and that a predetermined period is left until the expiration of the deadline for the provisional registration information. Further, the notification information may include, for example, a message that prompts the continuation of the provisional registration, a message that confirms the deletion of the provisional registration, a message that prompts the deposit of an additional amount of money, and a message that prompts transition to the definitive registration. Further, the notification information may include a message informing that privilege information will be given by the continuation of the provisional registration, the deposit of an additional amount of money, and the transition to the definitive registration. In addition, the notification information includes a provisional registration status. The provisional registration status is information indicating the current status including the provisional registration information and the provisional registration history of the user who has succeeded in the face authentication of the provisional registration information. The provisional registration status may include at least the payment balance.

In a case in which the response from the user indicates a request to continue the provisional registration, the update unit 346 updates the corresponding provisional registration information such that the available period (deadline information 3123) of the provisional registration information is extended. Furthermore, the update unit 346 may extend the available period and give predetermined privilege information to update the provisional registration information. In a case in which the response from the user indicates a request to delete the provisional registration, the update unit 346 deletes the corresponding provisional registration information. In a case in which the response from the user indicates the definitive registration transition request, the update unit 346 deletes the corresponding provisional registration information 312 along with the definitive registration process by the registration unit 342. In a case in which the response from the user indicates the payment balance update request, the update unit 346 adds an additional deposit amount to the payment balance 3122 of the corresponding provisional registration information to update the provisional registration information. Further, in a case in which the response from the user indicates the provisional registration continuation request and the deadline for the provisional registration extension has passed or the extended cumulative period has exceeded the upper limit, the update unit 346 may return a message indicating that the extension is not possible. Furthermore, in a case in which the response from the user indicates the payment balance update request, the deadline for additional deposit has passed or the total amount of money additionally deposited has exceeded the upper limit, the update unit 346 may return a message indicating that additional deposit is not possible. In addition, in a case in which the response from the user indicates the provisional registration continuation request or the payment balance update request and in any of the above-described cases, the update unit 346 may return a message that prompts transition to the definitive registration.

Returning to Fig. 3, the description will continue.

The authentication device 200 is an information processing device that stores the facial feature information of the user who performs the definitive registration. Further, in response to the face authentication request received from the outside, the authentication device 200 collates the face image included in the request or the facial feature information with the facial feature information of each user and transmits a collation result (authentication result) to the source of the request.

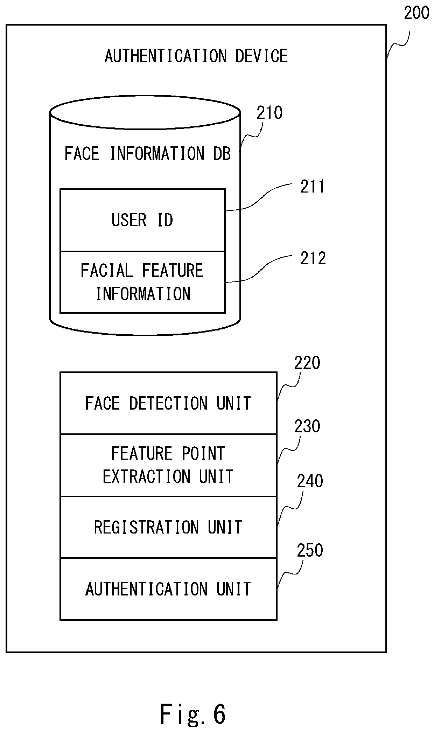

Fig. 6 is a block diagram showing a configuration of the authentication device 200 according to the second example embodiment. The authentication device 200 includes a face information database (DB) 210, a face detection unit 220, a feature point extraction unit 230, a registration unit 240, and an authentication unit 250. The face information DB 210 stores a user ID 211 and facial feature information 212 of the user ID in association with each other. The facial feature information 212 is a set of feature points extracted from a face image. In addition, the authentication device 200 may delete the facial feature information 212 in the facial feature DB 210 in response to a request from the user whose facial feature information 212 has been registered. Alternatively, the authentication device 200 may delete the facial feature information 212 after a lapse of a predetermined period from the definitive registration.

The face detection unit 220 detects a face region included in a registration image for registering face information and outputs the face region to the feature point extraction unit 230. The feature point extraction unit 230 extracts feature points from the face region detected by the face detection unit 220 and outputs facial feature information to the registration unit 240. In addition, the feature point extraction unit 230 extracts feature points included in the face image received from the authentication terminal 110 or the like or the authentication information management device 300 or the like and outputs facial feature information to the authentication unit 250.

The registration unit 240 newly issues the user ID 211 when registering the facial feature information. The registration unit 240 registers the issued user ID 211 and the facial feature information 212 extracted from the registration image in the face information DB 210 in association with each other. The authentication unit 250 performs face authentication using the facial feature information 212. Specifically, the authentication unit 250 collates the facial feature information extracted from the face image with the facial feature information 212 in the face information DB 210. In a case in which the collation has succeeded, the authentication unit 250 specifies the user ID 211 associated with the collated facial feature information 212. The authentication unit 250 transmits information indicating whether or not the pieces of facial feature information are matched with each other as a face authentication result to the source of the request. Whether or not the pieces of facial feature information are matched with each other corresponds to whether or not authentication has succeeded or failed. In addition, it is assumed that a case in which the pieces of facial feature information are matched with each other means a case in which the degree of matching is equal to or greater than a threshold value. Further, it is assumed that, in a case in which the face authentication has succeeded, the face authentication result includes the specified user ID.

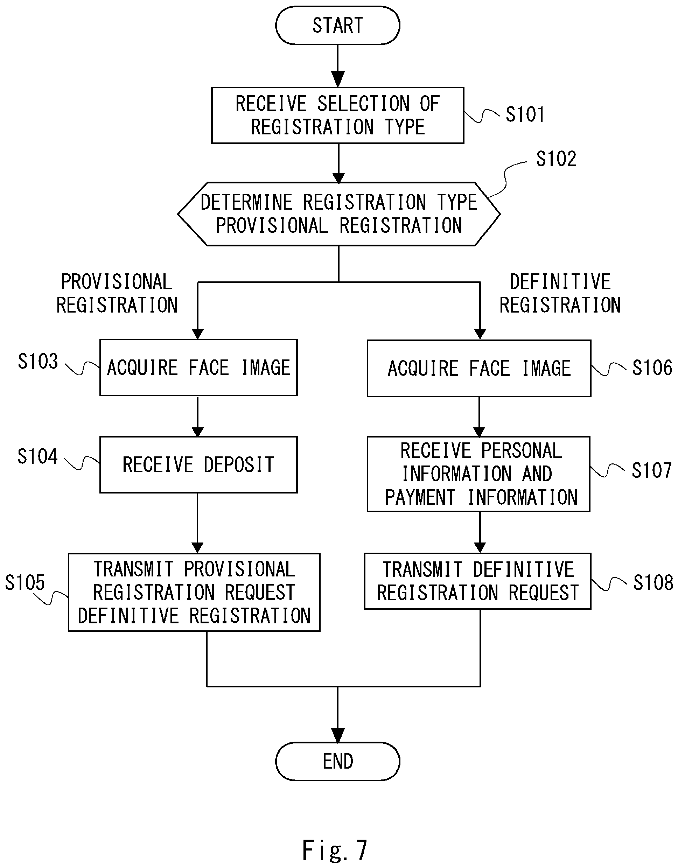

Fig. 7 is a flowchart showing a flow of a face information registration process by the registration terminal (authentication terminal 110) according to the second example embodiment. First, the authentication terminal 110 displays the receiving screen. It is assumed that, in order to use the payment service based on face authentication in the park 100, a "provisional registration" button and a "definitive registration" button for selecting the registration type for the registration information including the face image of the user are displayed on the receiving screen. Further, in the case of the first "provisional registration" or "definitive registration", information indicating that the privilege information will be given may be displayed on the receiving screen. The privilege information may be, for example, that 500 yen is added as a privilege amount to the payment balance.

Then, the acquisition unit 481 of the authentication terminal 110 receives the selection of the registration type by the operation of the user U (S101). Then, the acquisition unit 481 determines the registration type (S102). In a case in which the registration type is the provisional registration, the acquisition unit 481 acquires the face image of the user U captured by the camera 41 (S103). Then, the authentication terminal 110 prompts the user U to deposit a predetermined amount of money through the receiving screen or voice. The predetermined amount of money may be, for example, 1000 yen. The deposit receiving unit 42 receives a deposit of cash corresponding to the predetermined amount of money from the user U (S104). In addition, the deposit receiving unit 42 stores the deposited cash in the cash storage unit 43, counts the deposit amount, and notifies the control unit 48 of the counting result. In this way, the acquisition unit 481 acquires the deposit amount. Then, the registration unit 482 transmits the provisional registration request including the face image acquired in Step S103 and the deposit amount acquired in Step S104 to the authentication information management device 300 through the network N (S105).

In a case in which the registration type is the definitive registration in Step S102, the acquisition unit 481 acquires the face image of the user U captured by the camera 41 (S106). Then, the authentication terminal 110 displays input fields for personal information and payment information on the receiving screen and requests the user U to input the information. The acquisition unit 481 receives the personal information and the payment information input by the user U through the receiving screen (S107). Then, the registration unit 482 transmits the definitive registration request including the face image acquired in Step S106 and the personal information and the payment information acquired in Step S107 to the authentication information management device 300 through the network N (S108). In addition, Steps S103 and S106 may be performed before Step S101.

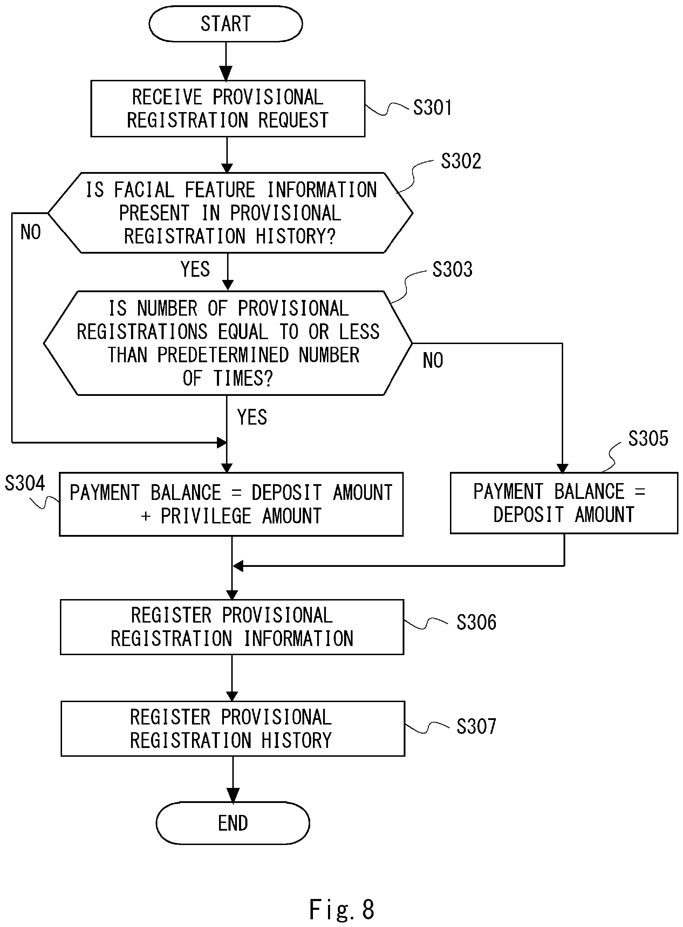

Fig. 8 is a flowchart showing a flow of a provisional registration process according to the second example embodiment. First, the acquisition unit 341 of the authentication information management device 300 receives the provisional registration request from the authentication terminal 110 through the network N (S301). In addition, the acquisition unit 341 may receive various processing requests from the authentication terminal 110 or the like, determine the type of the received request, and determine that the received request is the provisional registration request. Further, the determination of the type of the received request by the acquisition unit 341 is also the same in other processes.

The registration unit 342 acquires the face image from the received provisional registration request and extracts facial feature information from the face image. Then, the registration unit 342 determines whether or not the extracted facial feature information is present in the facial feature information 3131 of the provisional registration history 313 (S302). Specifically, the registration unit 342 collates the extracted facial feature information with each piece of facial feature information 3131 of the provisional registration history 313, calculates the degree of matching therebetween, and determines whether or not the degree of matching is equal to or greater than a threshold value. In a case in which all of the facial feature information 3131 has the degree of matching less than the threshold value, the registration unit 342 determines that the facial feature information is not present in the provisional registration history 313. In a case in which the facial feature information 3131 having a degree of matching equal to or greater than the threshold value is present, the registration unit 342 determines that the facial feature information is present in the provisional registration history 313. A case in which the facial feature information is not present in the provisional registration history 313 indicates that the user specified by the extracted facial feature information was not performed the provisional registration in the past, that is, the user is about to perform the provisional registration for the first time. In this case, the process proceeds to Step S304. On the other hand, in a case in which the facial feature information is present in the provisional registration history 313 in Step S302, the registration unit 342 determines whether or not the number of provisional registrations is equal to or less than a predetermined number of times (S303). Specifically, the registration unit 342 specifies the number of provisional registrations 3132 associated with the facial feature information 3131 of which the degree of matching with the extracted facial feature information is equal to or greater than the threshold value (in a case in which there are a plurality of pieces of facial feature information 3131, the facial feature information 3131 having the highest degree of matching). Then, the registration unit 342 determines whether or not the specified number of provisional registrations 3132 is equal to or less than a predetermined number of times. For example, the predetermined number of times may be 3. Further, instead of Step S303, the registration unit 342 may determine whether or not the cumulative value of the granted privilege amount in the privilege history 3133 is equal to or less than a predetermined value. For example, in a case in which the privilege amount to be granted is reduced as the number of provisional registrations increases or a bonus privilege is granted by paying for a predetermined product, the registration unit 342 may perform the determination on the basis of the privilege history, instead of the number of provisional registrations.

In a case in which the determination result in Step S302 is NO or the determination result in Step S303 is YES, the registration unit 342 adds the privilege amount to the deposit amount included in the provisional registration request to calculate the payment balance (S304). In addition, the privilege to be granted may be, for example, points as described above. Further, the registration unit 342 may determine the privilege amount according to the number of provisional registrations 3132 or the privilege history 3133. For example, the registration unit 342 may determine to reduce the privilege amount to be granted as the number of provisional registrations increases.

In a case in which the determination result in Step S303 is NO, the registration unit 342 sets the deposit amount included in the provisional registration request as the payment balance (S305). In addition, in a case in which the determination result in Step S303 is NO, for example, in a case in which the number of provisional registrations exceeds the predetermined number of times or in a case in which the cumulative value of the granted privilege amount exceeds a predetermined value, the registration unit 342 may not perform the provisional registration.

After Step S304 or S305, the registration unit 342 associates the extracted facial feature information 3121, the payment balance 3122 in Step S304 or S305, and the deadline information 3123 to generate the provisional registration information 312. In addition, the registration unit 342 may determine the deadline information 3123 according to the date and time when the provisional registration request is received. Then, the registration unit 342 registers the generated provisional registration information 312 in the storage unit 310 (S306). Further, the registration unit 342 associates the facial feature information 3121 included in the generated provisional registration information 312, the number of provisional registrations 3132, and the privilege history 3133 to generate the provisional registration history 313. In addition, the registration unit 342 sets the number of provisional registrations 3132 and the privilege history 3133 according to Step S304. For example, in the case of the first provisional registration (NO in Step S302), the registration unit 342 sets "1" in the number of provisional registrations 3132 and sets the privilege amount added in Step S304 in the privilege history 3133. Then, the registration unit 342 registers the provisional registration history 313 (S307). In addition, in a case in which the provisional registration is the second or subsequent provisional registration and the number of provisional registrations is equal to or less than the predetermined number of times (YES in Step S303), the registration unit 342 adds "1" to the number of provisional registrations 3132 in the provisional registration history 313 specified in Step S302 and adds the privilege amount added in Step S304 to the privilege history 3133 to update the provisional registration history 313.

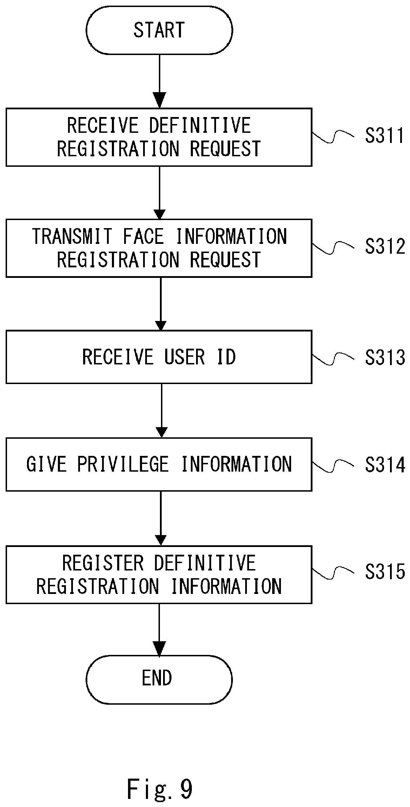

Fig. 9 is a flowchart showing a flow of a definitive registration process according to the second example embodiment. First, the acquisition unit 341 of the authentication information management device 300 receives the definitive registration request from the authentication terminal 110 through the network N (S311). Then, the registration unit 342 transmits the face information registration request that includes the face image included in the definitive registration request to the authentication device 200 through the network N (S312). Then, the registration unit 342 acquires the user ID which has been issued from the authentication device 200 according to the registration of the face information (S313). Then, the registration unit 342 gives the privilege information 3144 (S314). For example, the registration unit 342 may give, as the privilege information, a predetermined value of points that can be used for payment based on face authentication. In addition, in the case of the definitive registration, the privilege may not be necessarily granted. Then, the registration unit 342 associates the personal information 3142 and the payment information 3143 included in the definitive registration request and the given privilege information 3144 with the acquired user ID 3141 to generate the definitive registration information 314. Then, the registration unit 342 registers the generated definitive registration information 314 in the storage unit 310 (S315).

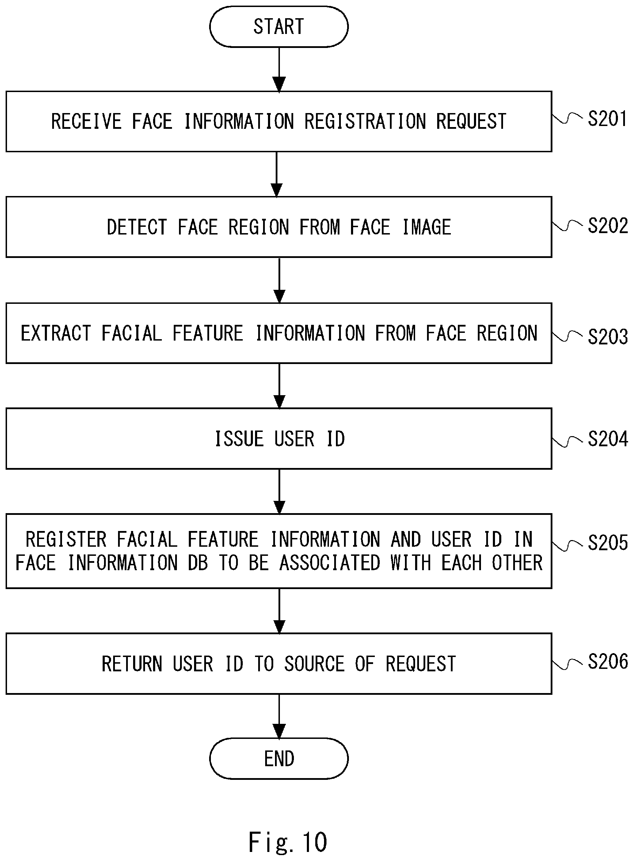

Fig. 10 is a flowchart showing a flow of a face information registration process by the authentication device 200 according to the second example embodiment. Here, an information registration terminal (not shown) captures an image of the body including the face of the user and transmits the face information registration request including the captured image (registration image) to the authentication device 200 through the network N. The information registration terminal is, for example, an information processing device such as a personal computer, a smartphone, or a tablet terminal. The information registration terminal may be, for example, the authentication terminal 110. Here, it is assumed that the information registration terminal is the authentication information management device 300 that has received the face information registration request from authentication terminal 110 or the like.

First, the authentication device 200 receives the face information registration request (S201). For example, the authentication device 200 receives the face information registration request from the authentication information management device 300 through the network N. Then, the face detection unit 220 detects a face region from the face image included in the face information registration request (S202). Then, the feature point extraction unit 230 extracts feature points (facial feature information) from the face region detected in Step S202 (S203). Then, the registration unit 240 issues the user ID 211 (S204). Then, the registration unit 240 registers the extracted facial feature information 212 and the issued user ID 211 in the face information DB 210 to be associated with each other (S205). Then, the registration unit 240 returns the issued user ID 211 to the source of the request (the information registration terminal, for example, the authentication information management device 300) (S206).

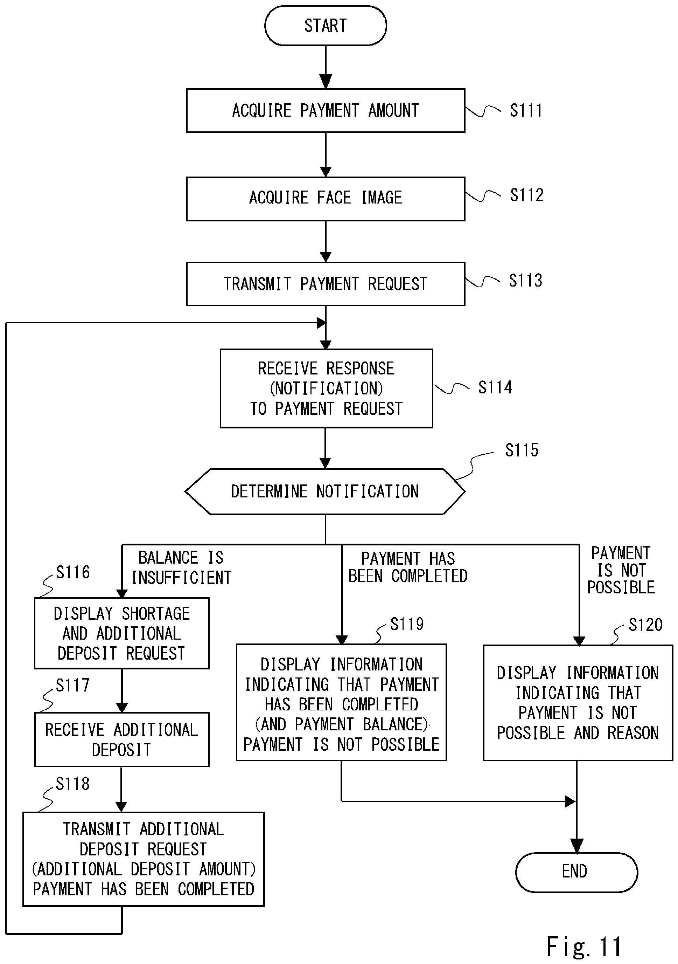

Fig. 11 is a flowchart showing a flow of a payment process by the authentication terminal 130 according to the second example embodiment. Here, it is assumed that, when the user U purchases a product in the store 160, payment based on face authentication is performed through the authentication terminal 130. First, the acquisition unit 481 of the authentication terminal 130 acquires a payment amount (S111). For example, the authentication terminal 130 acquires a payment amount from a product code read by a scanner connected to the authentication terminal 130. Then, the acquisition unit 481 acquires the face image of the user U captured by the camera 41 (S 112). Then, the payment processing unit 485 transmits the payment request including the payment amount acquired in Step S111 and the face image acquired in Step S 112 to the authentication information management device 300 through the network N (S 113).

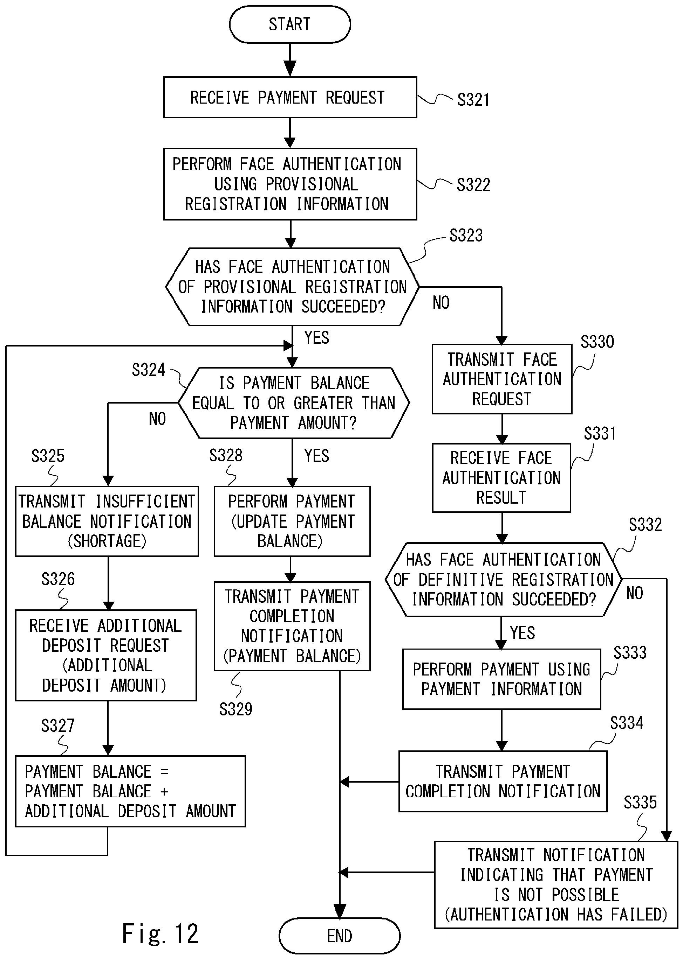

Next, a process after the authentication information management device 300 receives the payment request will be described. Fig. 12 is a flowchart showing a flow of a payment process by the authentication information management device 300 according to the second example embodiment. First, the acquisition unit 341 receives the payment request from the authentication terminal 130 through the network N (S321). In addition, at this time, when starting the following payment process, the authentication information management device 300 may issue a session ID for identifying the payment process.

Then, the authentication control unit 343 controls the face authentication using the facial feature information 3121 included in the provisional registration information 312 (S322). Specifically, the authentication control unit 343 extracts facial feature information from the face image included in the request and collates the extracted facial feature information with the facial feature information 3121 included in the provisional registration information 312 to perform face authentication as described above. Then, the authentication control unit 343 determines whether or not the face authentication of the provisional registration information has succeeded (S323).

In a case in which the face authentication of the provisional registration information has succeeded, the payment unit 344 determines whether or not the payment balance of the user who has succeeded in the face authentication is equal to or greater than the payment amount included in the payment request (S324). Specifically, the payment unit 344 specifies the payment balance 3122 associated with the facial feature information 3121 of the user who has succeeded in the face authentication. Then, the payment unit 344 determines whether or not the specified payment balance 3122 is equal to or greater than the payment amount included in the payment request.

In a case in which the payment balance is equal to or greater than the payment amount in Step S324, the payment unit 344 pays the payment amount using the payment balance 3122 of the provisional registration information 312 (S328). Specifically, the payment unit 344 subtracts the payment amount from the specified payment balance 3122 to update the provisional registration information 312. Then, the payment unit 344 transmits a payment completion notice including the updated payment balance 3122 to the authentication terminal 130, which is the source of the request, through the network N (S329).

On the other hand, in a case in which the payment balance is less than the payment amount in Step S324, the payment unit 344 subtracts the payment balance from the payment amount to calculate a shortage. Then, the payment unit 344 transmits a balance shortage notification including the shortage to the authentication terminal 130, which is the source of the request, through the network N (S325). At this time, the payment unit 344 may include the session ID issued above in the balance shortage notification.

Returning to Fig. 11, the description will continue. The acquisition unit 481 of the authentication terminal 130 receives a response (notification) to the payment request in Step S 113 from the authentication information management device 300 through the network N (S 114). The acquisition unit 481 determines the type of the received notification (S115). In a case in which the type of the notification is the payment completion notification, the display control unit 483 displays that payment has been completed (S119). In particular, in a case in which the payment completion notification includes the payment balance, that is, in a case in which the payment has been made using the provisional registration information, the display control unit 483 displays information indicating the completion of the payment and the payment balance included in the notification.

In a case in which the type of the notification is the balance shortage notification in Step 5115, the display control unit 483 displays the shortage included in the notification and an additional deposit request message (S116). In accordance with this, the deposit receiving unit 42 of the authentication terminal 130 receives cash that has been additionally deposited from the user U (S117). The deposit receiving unit 42 stores the deposited cash in the cash storage unit 43, counts the additional deposit amount, and notifies the control unit 48 of the counting result. Therefore, the acquisition unit 481 acquires the additional deposit amount. Then, the payment processing unit 485 transmits an additional deposit request including the additional deposit amount acquired in Step S117 to the authentication information management device 300 through the network N (S118). At this time, the payment processing unit 485 may include the face image acquired in Step S112 in the additional deposit request. Alternatively, in a case in which the session ID is included in the balance shortage notification, the payment processing unit 485 may include the session ID in the additional deposit request. Then, the process returns to Step S114.

Returning to Fig. 12, the description will continue. The acquisition unit 341 of the authentication information management device 300 receives the additional deposit request from the authentication terminal 130 (S326). In a case in which the face image is included in the additional deposit request, the acquisition unit 341 may check whether the face image is the same as the face image included in the payment request received in Step S321 to recognize that the payment process is ongoing. Alternatively, in a case in which the session ID is included in the additional deposit request and is matched with the session ID issued after Step S321, the acquisition unit 341 may recognize that the payment process is ongoing. Here, it is assumed that the ongoing payment process is recognized.

Therefore, the payment unit 344 adds the additional deposit amount included in the additional deposit request to the payment balance 3122 specified in Step S324 to calculate (update) the payment balance (S327). Then, the process returns to Step S324 to continue the payment process. For example, in a case in which the payment balance is equal to or greater than the payment amount (due to the additional deposit) in Step S324, Steps S328 and S329 are performed as described above. On the other hand, in a case in which the payment balance is less than the payment amount (even considering the additional deposit) in Step S324, Step S325 and the subsequent steps are performed again. In addition, in a case in which the number of times the determination result in Step S324 is NO is equal to or greater than a predetermined number of times, the payment unit 344 may transmit a payment failure notification including the reason for the lack of money to the authentication terminal 130 through the network N.

In a case in which the face authentication of the provisional registration information has failed in Step S323, the authentication control unit 343 transmits the face authentication request that includes the face image included in the payment request to the authentication device 200 through the network N (S330).

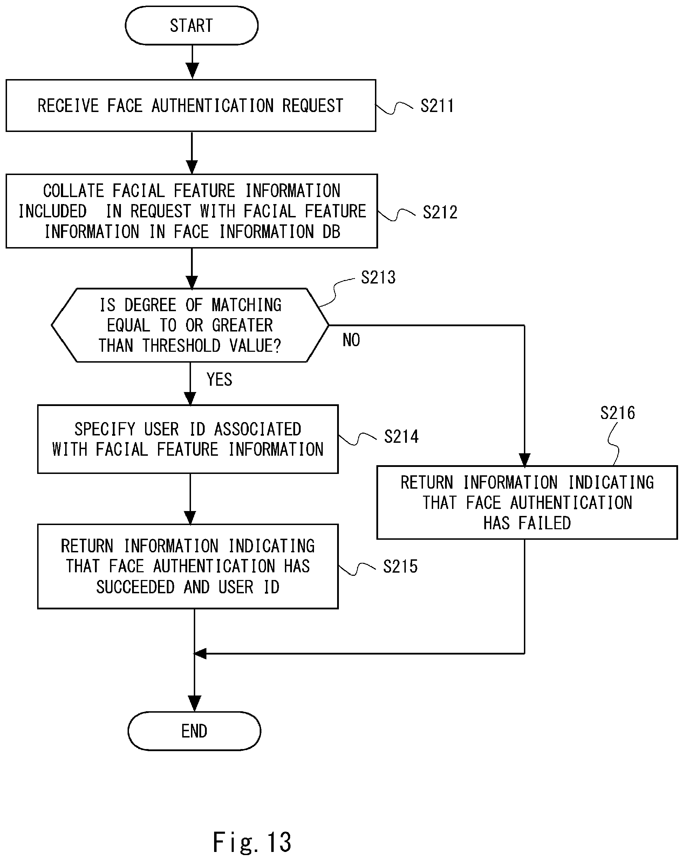

Fig. 13 is a flowchart showing a flow of a face authentication process by the authentication device 200 according to the second example embodiment. For example, the authentication device 200 receives the face authentication request from the authentication information management device 300 through the network N (S211). In addition, the authentication device 200 may receive the face authentication request from, for example, the authentication terminal 110. Then, the authentication device 200 extracts facial feature information from the face image included in the face authentication request as in Steps S202 and S203 described above. Then, the authentication unit 250 of the authentication device 200 collates the facial feature information extracted from the face image included in the face authentication request with the facial feature information 212 in the face information DB 210 (S212) and calculates the degree of matching therebetween. Then, the authentication unit 250 determines whether or not the degree of matching is equal to or greater than a threshold value (S213). In a case in which the pieces of facial feature information are matched with each other, that is, in a case in which the degree of matching between the pieces of facial feature information is equal to or greater than the threshold value, the authentication unit 250 specifies the user ID 211 associated with the facial feature information 212 (S214). Then, the authentication unit 250 returns a face authentication result, which includes information indicating that the face authentication has succeeded and the specified user ID 211, to the authentication information management device 300 through the network N (S215). In a case in which the degree of matching is less than the threshold value in Step S213, the authentication unit 250 returns a face authentication result including information indicating that the face authentication has failed to the authentication information management device 300 through the network N (S216).

Returning to Fig. 12, the description will continue. The authentication control unit 343 of the authentication information management device 300 receives the face authentication result from the authentication device 200 (S331). Then, the authentication control unit 343 determines whether or not the face authentication of the definitive registration has succeeded from the received face authentication result (S332). In a case in which the face authentication of the definitive registration has succeeded, the payment unit 344 pays the payment amount using the payment information 3143 in the definitive registration information 314 (S333). Specifically, first, the authentication control unit 343 specifies the user ID included in the face authentication result. Then, the payment unit 344 specifies the payment information 3143 associated with the specified user ID 3141 in the definitive registration information 314. Then, the payment unit 344 performs the payment process on the basis of the specified payment information 3143. For example, the payment unit 344 transmits the payment request including the payment information 3143 and the payment amount to an external payment server (a server of a financial institution or a credit card company) corresponding to the payment information 3143. Then, the payment unit 344 receives the payment result from the payment server. Then, the payment unit 344 transmits the payment completion notice to the authentication terminal 130, which is the source of the request, through the network N (S334).

On the other hand, in a case in which the face authentication of the definitive registration has failed in Step S332, the payment unit 344 transmits the payment failure notification including information indicating that the face authentication has failed to the authentication terminal 130, which is the source of the request, through the network N (S335). In addition, in this example embodiment, an example has been described in which the provisional registration biometric information DB (the provisional registration information 312 in the authentication information management device 300) and the definitive registration biometric information DB (the face information DB 210 in the authentication device 200) are managed in different storage devices. Therefore, in Fig. 12, a case has been described in which the face authentication of the provisional registration information is performed first and the face authentication of the definitive registration information is performed when the face authentication of the provisional registration information has failed. However, in Fig. 12, the order of the face authentication of the provisional registration information and the face authentication of the definitive registration information may be reversed. In this case, Steps S330 to S334 may be performed after Step S321. In a case in which the determination result in S332 is NO, S322 to S329 may be performed. In a case in which the determination result in S323 is NO, S335 may be performed. Alternatively, the face authentication of the provisional registration information and the face authentication of the definitive registration information may be performed in parallel, and payment may be made on the side where the face authentication has succeeded. In a case in which both the face authentication of the provisional registration information and the face authentication of the definitive registration information have succeeded, payment with the definitive registration information may be prioritized.

Returning to Fig. 11, the description will continue. The acquisition unit 481 of the authentication terminal 130 receives a response (notification) to the payment request in Step S113 from the authentication information management device 300 through the network N (S114). The acquisition unit 481 determines the type of the received notification (S115). Here, it is assumed that the type of the notification is the payment failure notification. Therefore, the display control unit 483 displays the fact that the payment is not possible and the reason included in the payment failure notification (for example, the fact that the face authentication has failed and the lack of money) (S120).

The payment process by the authentication terminal 130 installed in the store 160 has been described above. A payment process by the authentication terminal 120 connected to the locker 150 is the same. However, in Step S111 of Fig. 11, the authentication terminal 120 acquires a payment amount corresponding to the type (for example, the size) of the locker to be locked or unlocked. Further, along with Step S119, the authentication terminal 120 locks or unlocks the corresponding locker. In addition, the payment process shown in Fig. 11 can also be applied to authentication terminals that are installed in, for example, vending machines and entrance gates of facilities.

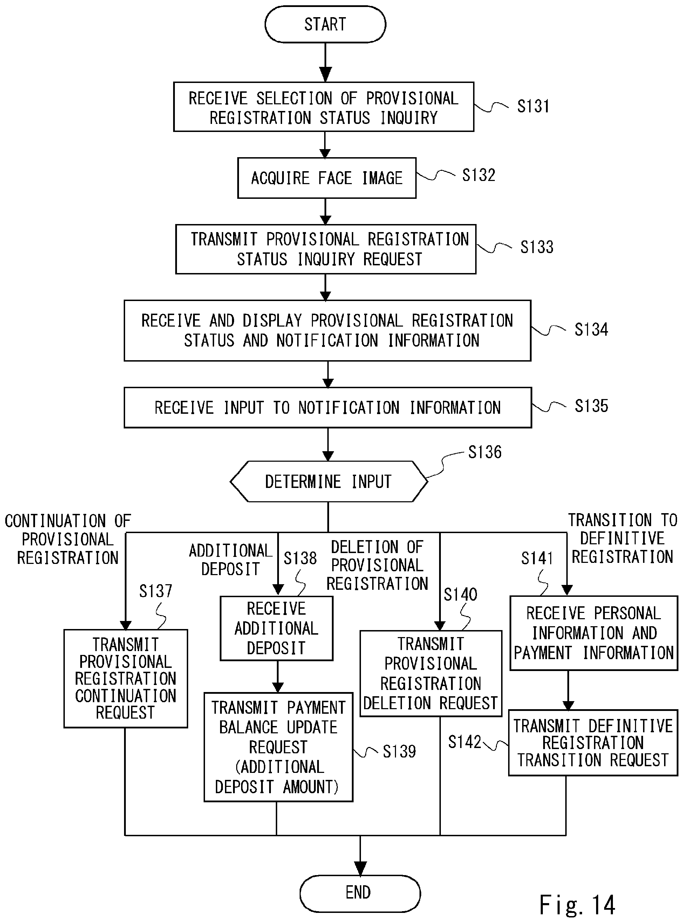

Fig. 14 is a flowchart showing a flow of a process corresponding to the provisional registration status which is performed by the authentication terminal 140 according to the second example embodiment. Here, it is assumed that the user U makes a provisional registration status inquiry using face authentication through the authentication terminal 140 installed at the exit of the park 100. However, the process corresponding to the provisional registration status may be performed in other authentication terminals 110 to 130.

First, the authentication terminal 140 displays the receiving screen. It is assumed that a "provisional registration status inquiry" button for inquiring the payment balance charged (prepaid) in order to use the payment service based on face authentication in the park 100 is displayed on the receiving screen.

Then, the acquisition unit 481 of the authentication terminal 140 receives the selection of the "provisional registration status inquiry" button by the operation of the user U (S131). Then, the acquisition unit 481 acquires the face image of the user U captured by the camera 41 (S132). Then, the authentication control unit 484 transmits the provisional registration status inquiry request including the face image acquired in Step S132 to the authentication information management device 300 through the network N (S133).

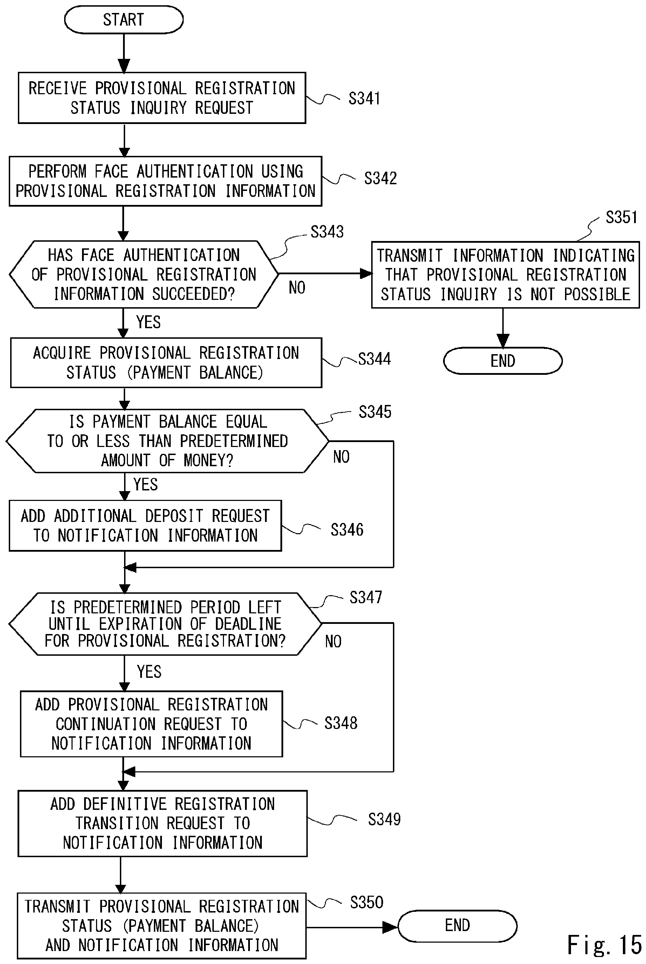

Next, a process after the authentication information management device 300 receives the provisional registration status inquiry request will be described. Fig. 15 is a flowchart showing a flow of a process corresponding to the provisional registration status inquiry which is performed by the authentication information management device 300 according to the second example embodiment. First, the acquisition unit 341 receives the provisional registration status inquiry request from the authentication terminal 140 through the network N (S341). In addition, at this time, when starting the following process, the authentication information management device 300 may issue a session ID for identifying the process.

Then, the authentication control unit 343 controls the face authentication using the facial feature information 3121 included in the provisional registration information 312 on the basis of the face image included in the provisional registration status inquiry request (S342). Then, the authentication control unit 343 determines whether or not the face authentication of the provisional registration information has succeeded (S343). In a case in which the face authentication of the provisional registration information has failed in Step S343, the authentication control unit 343 transmits information indicating that the provisional registration status inquiry is not possible to the authentication terminal 140, which is the source of the request, through the network N (S351).

In a case in which the face authentication of the provisional registration information has succeeded in Step S343, the authentication control unit 343 acquires the provisional registration status that includes the payment balance 3122 associated with the facial feature information 3121 of the user who has succeeded in the face authentication (S344). Specifically, the authentication control unit 343 reads the provisional registration information 312 and the provisional registration history 313 corresponding to the user, who has succeeded in the face authentication, from the storage unit 310 and generates the provisional registration status. For example, the authentication control unit 343 specifies and calculates, for example, the first provisional registration date, the provisional registration period up to the present time, the number of provisional registrations, the cumulative value of the granted privilege from the deadline information 3123 and the provisional registration history 313 and includes them in the provisional registration status. In addition, the authentication control unit 343 may calculate the remaining value of each item until the use of the provisional registration information is restricted (satisfies the first condition). That is, the authentication control unit 343 may calculate the remaining value up to the upper limit of the available condition for the provisional registration information. For example, the authentication control unit 343 calculates, for example, the amount of money that can be additionally deposited before the use of the provisional registration information is restricted, the remaining period for which the provisional registration information can be used, the number of times the deadline can be extended or additional provisional registration can be performed, and the number of privileges that can be granted. Then, the authentication control unit 343 may include the remaining value up to the upper limit of the available condition for the provisional registration information in the provisional registration status. Then, the authentication control unit 343 determines whether or not the payment balance of the user who has succeeded in the face authentication is equal to or less than a predetermined amount of money (S345). In a case in which the payment balance is equal to or less than the predetermined amount of money, the authentication control unit 343 adds the additional deposit request to the notification information (S346). Further, in a case in which the privilege granting condition, such as the second condition, is satisfied, the authentication control unit 343 may add a message informing that the privilege information will be given to the notification information together with the additional deposit request.

After Step S346 or in a case in which the determination result in Step S345 is NO, the authentication control unit 343 determines whether or not a predetermined period is left until the expiration of the deadline for the provisional registration (S347). In a case in which the predetermined period is left until the expiration of the deadline for the provisional registration, the authentication control unit 343 adds a provisional registration continuation request to the notification information (S348). Further, in a case in which the privilege granting condition, such as the second condition, is satisfied, the authentication control unit 343 may add a message informing that the privilege information will be given to the notification information together with the provisional registration continuation request.

After Step S348 or in a case in which the determination result in Step S347 is NO, the authentication control unit 343 adds the definitive registration transition request to the notification information (S349). In addition, in Step S349, in a case in which the provisional registration status inquiry request is received, the definitive registration transition request is always notified. Instead of this, in a case in which the number of provisional registrations is equal to or greater than a predetermined number of times, the definitive registration transition request may be issued. In this case, in a case in which the determination result in Step S348 or Step S347 is NO, the authentication control unit 343 determines whether or not the number of provisional registrations exceeds a predetermined number of times. In a case in which the number of provisional registrations exceeds the predetermined number of times, the authentication control unit 343 may add the definitive registration transition request to the notification information. Further, in a case in which the privilege granting condition, such as the second condition, is satisfied, the authentication control unit 343 may add a message informing that the privilege information will be given to the notification information together with the definitive registration transition request. Then, the authentication control unit 343 transmits the provisional registration status including the payment balance acquired (generated) in Step S344 and the notification information added above to the authentication terminal 140, which is the source of the request, through the network N (S350). At this time, the authentication control unit 343 may include the session ID issued above in the notification information.

Returning to Fig. 14, the description will continue. The acquisition unit 481 of the authentication terminal 140 receives the provisional registration status and the notification information as a response to the provisional registration status inquiry request in Step S133 from the authentication information management device 300 through the network N. Then, the display control unit 483 displays the received provisional registration status and notification information (S134). For example, the display control unit 483 displays a message that prompts transition from the provisional registration to the definitive registration and a selection button (definitive registration transition) in response to the definitive registration transition request included in the notification information. Further, in a case in which the notification information includes the additional deposit request, the display control unit 483 displays a message that prompts additional deposit and a selection button (additional deposit). Furthermore, in a case in which the notification information includes the provisional registration continuation request, the display control unit 483 displays a message that prompts the continuation of the provisional registration and a selection button (the continuation of the provisional registration). In addition, the display control unit 483 displays a message that confirms the deletion of the provisional registration and a selection button (the deletion of the provisional registration). Further, the display control unit 483 may display a message informing that the privilege information will be given, together with at least one of the definitive registration transition request, the additional deposit request, and the provisional registration continuation request.

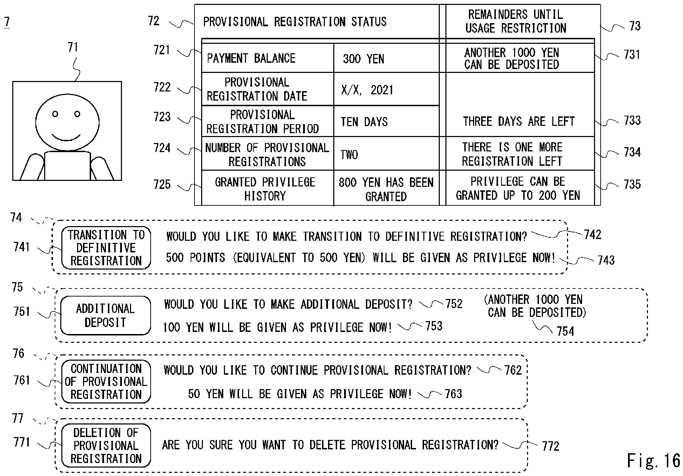

Fig. 16 is a diagram showing an example of the display of a provisional registration status display screen 7 according to the second example embodiment. The provisional registration status display screen 7 includes a face image 71, a provisional registration status 72, remainders 73 until usage restriction, a definitive registration transition field 74, an additional deposit field 75, a provisional registration continuation field 76, and a provisional registration deletion field 77. The face image 71 may be the face image acquired in Step S132 or may be the face image included in the notification information by the success of the face authentication in the authentication information management device 300. However, the face image 71 may be omitted in the provisional registration status display screen 7.

The provisional registration status 72 is the information received in Step S134 and is information indicating the current provisional registration status of the user U. The provisional registration status 72 includes a payment balance 721, a provisional registration date 722, a provisional registration period 723, the number of provisional registrations 724, and a granted privilege history 725. However, the provisional registration status 72 may include at least the payment balance 721. In the example shown in Fig. 16, the payment balance 721 is 300 yen, the provisional registration date 722 is X/X, 2021, the provisional registration period 723 is 10 days, the number of provisional registrations 724 is 2, and the granted privilege history 725 shows that 800 yen has been granted.

The remainders 73 until usage restriction are the information received in Step S 134 and are the remaining value of each item until the use of the current provisional registration of the user U is restricted. The remainders 73 until usage restriction include a depositable amount 731, a remaining provisional registration period 733, the remaining number of provisional registrations 734, and a grantable privilege amount 735. However, the remainders 73 until usage restriction on the provisional registration status display screen 7 is not essential. In the example shown in Fig. 16, the depositable amount 731 shows that another 1000 yen can be deposited, the remaining provisional registration period 733 shows that 3 days are left, the remaining number of provisional registrations 734 is 1, and the grantable privilege amount 735 shows that the privilege can be granted up to 200 yen.

The definitive registration transition field 74 is displayed in a case in which the definitive registration transition request is included in the notification information received in Step S134. The definitive registration transition field 74 includes a selection button 741, a definitive registration transition request message 742, and a privilege granting guidance message 743. The selection button 741 is a button for receiving an operation of selecting transition to the definitive registration from the user U. The definitive registration transition request message 742 is an example of a message that prompts transition from the provisional registration to the definitive registration and is, for example, "Would you like to make a transition to definitive registration?". The privilege granting guidance message 743 is an example of a message informing that the privilege information will be given and is, for example, "500 points (equivalent to 500 yen) will be given as a privilege now!".

The additional deposit field 75 is displayed in a case in which the additional deposit request is included in the notification information received in Step S134. The additional deposit field 75 includes a selection button 751, an additional deposit request message 752, a privilege granting guidance message 753, and a depositable amount 754. The selection button 751 is a button for receiving an additional deposit selection operation from the user U. The additional deposit request message 752 is an example of a message that prompts an additional deposit and is, for example, "Would you like to make an additional deposit?". The privilege granting guidance message 753 is an example of a message informing that the privilege information will be given and is, for example, "100 yen will be given as a privilege now!". The depositable amount 754 is the same as the depositable amount 731 and is information indicating the amount of money that can be deposited up to the usage restriction.

The provisional registration continuation field 76 is displayed in a case in which the provisional registration continuation request is included in the notification information received in Step S134. The provisional registration continuation field 76 includes a selection button 761, a provisional registration continuation request message 762, and a privilege granting guidance message 763. The selection button 761 is a button for receiving an operation of selecting the continuation of the provisional registration from the user U. The provisional registration continuation request message 762 is an example of a message that prompts the continuation of the provisional registration and is, for example, "Would you like to continue provisional registration?". The privilege granting guidance message 763 is an example of a message informing that the privilege information will be given and is, for example, "50 yen will be given as a privilege now!".

The provisional registration deletion field 77 is always displayed. Alternatively, the provisional registration deletion field 77 may be displayed in a case in which the third condition is satisfied, similarly to other fields. The provisional registration deletion field 77 includes a selection button 771 and a provisional registration deletion confirmation message 772. The selection button 771 is a button for receiving an operation of selecting the deletion of the provisional registration from the user U. The provisional registration deletion confirmation message 772 is an example of a message for confirming the deletion of the provisional registration and is, for example, "Are you sure you want to delete the provisional registration?"

In addition, the privilege granting guidance message 743, the privilege granting guidance message 753, and the privilege granting guidance message 763 are displayed in a case in which the notification information includes a message informing that the privilege information will be given along with each request.

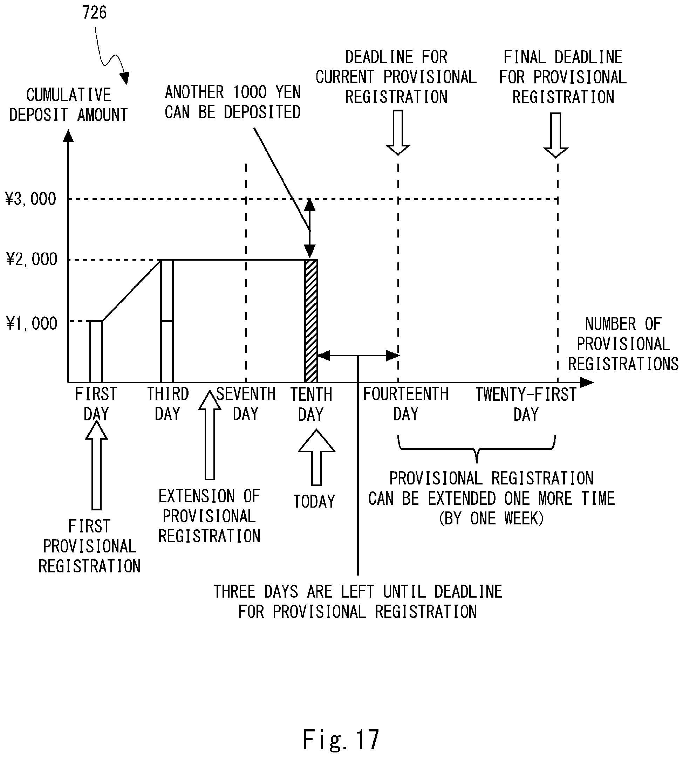

Fig. 17 is a diagram showing an example of the display of a history of a cumulative deposit amount in the provisional registration status according to the second example embodiment. For example, the provisional registration status display screen 7 may further include a cumulative deposit amount history 726. The cumulative deposit amount history 726 is an example of the graphical display of the cumulative deposit amount according to the number of days of the provisional registration. The cumulative deposit amount history 726 includes the amount of money deposited by the user U for the provisional registration, the date of deposit, the current cumulative deposit amount, and the remaining depositable amount up to the maximum deposit amount. In addition, the cumulative deposit amount history 726 may include the first provisional registration date, the time to extend the provisional registration, the deadline for the current provisional registration, the number of days remaining until the deadline for the provisional registration, the final deadline for the provisional registration, the period to which the provisional registration can be extended, and the possible number of provisional registrations.

Returning to Fig. 14, the description will continue.

After Step S134, the display control unit 483 receives an input (selection operation) on the screen from the user U (S135). Then, the authentication control unit 484 determines the content of the input (the type of the selected selection button) (S136).

In a case in which the continuation of the provisional registration (selection button 761) is selected in Step S136, the authentication control unit 484 transmits the provisional registration continuation request to the authentication information management device 300 through the network N (S137).

In a case in which the additional deposit (selection button 751) is selected in Step S136, the display control unit 483 displays an additional deposit request message. In accordance with this, the deposit receiving unit 42 receives cash that has been additionally deposited from the user U (S138). The deposit receiving unit 42 stores the deposited cash in the cash storage unit 43, counts the additional deposit amount, and notifies the control unit 48 of the counting result. Therefore, the acquisition unit 481 acquires the additional deposit amount. Then, the authentication control unit 484 transmits the payment balance update request including the additional deposit amount acquired in Step S138 to the authentication information management device 300 through the network N (S139).

In a case in which the deletion of the provisional registration (selection button 771) is selected in Step S136, the authentication control unit 484 transmits the provisional registration deletion request to the authentication information management device 300 through the network N (S140).

In a case in which the transition to the definitive registration (selection button 741) is selected in Step S136, the display control unit 483 displays input fields for personal information and payment information on the receiving screen and requests the user U to input them. The acquisition unit 481 receives the personal information and the payment information input by the user U through the receiving screen (S141). Then, the registration unit 482 transmits the definitive registration request including the face image acquired in Step S132 and the personal information and the payment information acquired in Step S141 to the authentication information management device 300 through the network N (S142).

In addition, in Steps S137, S139, and S140, the authentication control unit 484 may include the face image acquired in Step S132 in each request. Alternatively, in a case in which the notification information includes the session ID, the authentication control unit 484 may include the session ID in each request. Further, in Step S142, the registration unit 482 may include the session ID in the definitive registration request instead of the face image.

Furthermore, in a case in which information indicating that the provisional registration status inquiry is not possible is received in Step S134, the display control unit 483 displays the information indicating that the provisional registration status inquiry is not possible, and the process ends.

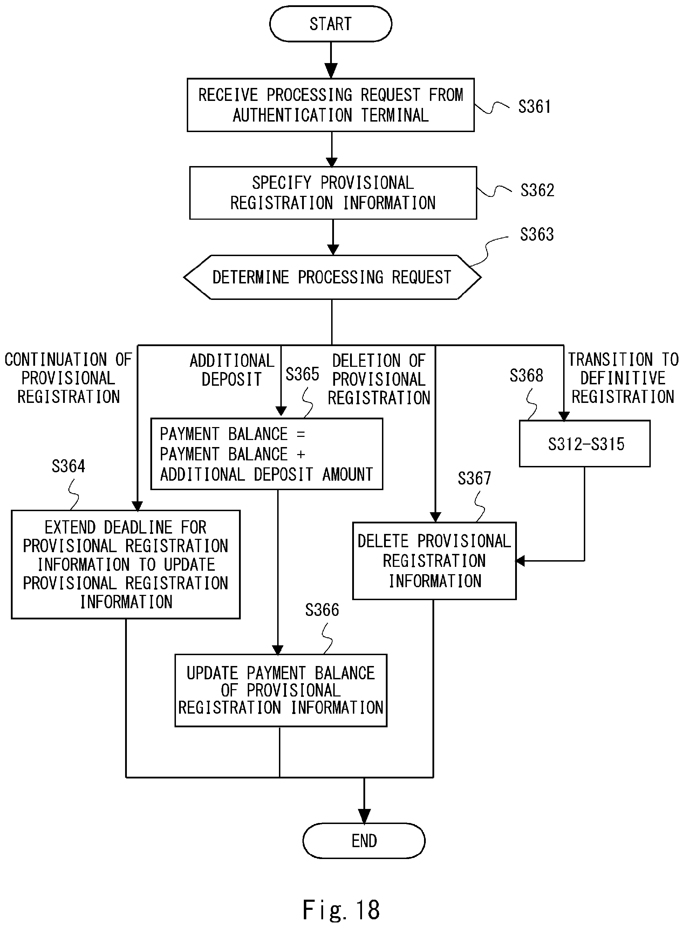

Fig. 18 is a flowchart showing a flow of a process for a response corresponding to the notification information by the authentication information management device 300 according to the second example embodiment. First, the acquisition unit 341 receives various processing requests from the authentication terminal 140 through the network N (S361). In a case in which the face image is included in the various processing requests, the authentication control unit 343 may check whether or not the face image is the same as the face image included in the provisional registration status inquiry request received in Step S341 and specify the provisional registration information 312 of the user who has succeeded in the face authentication in Step S342. Alternatively, in a case in which the session ID is included in the various processing requests and is matched with the session ID issued after Step S341, the authentication control unit 343 may specify the provisional registration information 312 of the user who has succeeded in the face authentication in Step S342. Here, it is assumed that the provisional registration information 312 of the user who has succeeded in the face authentication in Step S342 is specified.

Then, the update unit 346 determines the type of the processing request received in Step S361 (S363). In a case in which it is determined in Step S363 that the type of the processing request is the continuation of the provisional registration, the update unit 346 extends the deadline (deadline information 3123) for the specified provisional registration information to update the provisional registration information (S364). At this time, the update unit 346 may further increase the number of provisional registrations 3132 to update the provisional registration information. Furthermore, the update unit 346 may give predetermined privilege information to update the provisional registration information. In addition, before Step S364, the update unit 346 may determine whether or not a predetermined period has not elapsed since the registration of the provisional registration information and perform Step S364 in a case in which this condition is satisfied.

In a case in which it is determined in Step S363 that the type of the processing request is an additional deposit, the update unit 346 adds the additional deposit amount included in the payment balance update request to the payment balance of the specified provisional registration information (S365). Further, the update unit 346 may add a privilege amount to the payment balance. Then, the update unit 346 updates the payment balance 3122 of the specified provisional registration information with the payment balance after the addition (S366). In addition, before Step S365, the update unit 346 may determine whether or not the cumulative deposit amount in the provisional registration is equal to or less than a predetermined value and perform Step S365 in a case in which this condition is satisfied.

In a case in which it is determined in Step S363 that the type of the processing request is the deletion of the provisional registration, the update unit 346 deletes the specified provisional registration information (S367).

In a case in which it is determined in Step S363 that the type of the processing request is the transition to the definitive registration, the registration unit 342 performs the definitive registration process as in Steps S312 and S315 of Fig. 9 (S368). However, the giving of the privilege information in Step S3 14 is not essential. For example, in a case in which a predetermined period has not elapsed since the registration of the provisional registration information, the registration unit 342 may give the privilege information 3144. In addition, in a case in which the face image is included in the definitive registration transition request, the registration unit 342 may use the face image for the definitive registration. Alternatively, the registration unit 342 may include the facial feature information 3121 in the specified provisional registration information in the definitive registration request. Then, Step S367 is performed.

As described above, the second example embodiment has the following effects in addition to the effects of the first example embodiment. First, in a case in which the first condition (usage restriction condition) is satisfied, the provisional registration information is deleted to restrict the payment service using the provisional registration information. Therefore, it is possible to guarantee temporary use. The provisional registration of the biometric information can be performed, which motivates the user to visit a facility such as the Park 100. In addition, in a case in which the second condition (privilege granting condition) is satisfied or at the time of the definitive registration, the privilege information can be given to promote new provisional registration. Further, in a case in which the third condition (user notification condition) is satisfied, it is possible to promote the continuous use of the payment service based on face authentication because the continuation of the provisional registration and an additional deposit is prompted. Furthermore, after the user experiences the convenience of the payment service based on face authentication through the provisional registration, the transition to the definitive registration is prompted. Therefore, it is possible to reduce the complexity of input and resistance to registering important personal information and payment information and to promote the definitive registration. Moreover, at the time of the continuation of the provisional registration, an additional deposit, and the transition to the definitive registration, the privilege information is given. Therefore, it is possible to promote the continuous use of the payment service based on face authentication. In addition, an additional deposit is received when the payment balance is insufficient. Therefore, it is possible to improve the convenience of the payment service based on face authentication.

Further, the second example embodiment may be used as follows.

For example, the provisional registration information can be used for one week with one provisional registration (the provisional registration period is one week). In this case, the provisional registration information (payment balance) is unavailable one week after the first provisional registration date (the expiration of the provisional registration period). In addition, the user U can request the continuation of the provisional registration within the provisional registration period. In a case in which the provisional registration is continued, the number of provisional registrations may be increased. Alternatively, after the provisional registration information is unavailable due to the expiration of the provisional registration period, the user U can perform the provisional registration again. In this case, the number of provisional registrations is also increased. Further, for example, the upper limit of the number of provisional registrations is set to 3, and the maximum provisional registration period is set to 3 weeks. Therefore, in a case in which the number of provisional registrations exceeds 3 or in a case in which the cumulative provisional registration period exceeds 3 weeks, the user U is not able to continuously use the provisional registration information even when the user makes a request to continue the provisional registration or makes the provisional registration request again. Further, for example, the upper limit of the cumulative value of the granted privilege is set to 1200 yen, and the upper limit of the deposit amount is set to 3000 yen.

For example, it is assumed that the user U deposits 1000 yen in the first provisional registration. In this case, the provisional registration period is 1 week, 500 yen is granted as the privilege amount, the payment balance is 1500 yen, and the cumulative deposit amount is 1000 yen. Then, the user U can use up to 1500 yen for payment, using the payment service based on face authentication. At this time, the payment amount is subtracted from the payment balance.

Then, when the user U makes a provisional registration status request with a predetermined authentication terminal before the expiration of the provisional registration deadline, for example, on the sixth day after the first provisional registration, the provisional registration status display screen 7 or an equivalent is displayed. However, specific examples of the provisional registration status 72 and the remainders 73 until usage restriction are different. Then, the user U additionally deposits 1000 yen and requests the continuation of the provisional registration. In accordance with this, a privilege amount of 300 yen, which is lower than that in the first provisional registration, is granted because of the second deposit, and 1300 yen is added to the payment balance. In addition, the number of provisional registrations is 2, and the provisional registration period is extended to 2 weeks (the deadline for the use of the provisional registration information is 2 weeks after the first provisional registration date). Further, the cumulative deposit amount is 2000 yen.

Then, for example, when the user U makes a provisional registration status request with a predetermined authentication terminal on the 10th day after the initial provisional registration, the provisional registration status display screen 7 or an equivalent is displayed. Then, the user U additionally deposits 1000 yen and requests the continuation of the provisional registration. In accordance with this, a privilege amount of 100 yen, which is lower than that in the second provisional registration, is granted because of the third deposit, a privilege amount of 50 yen is granted because of the continuation of the provisional registration, and 1150 yen is added to the payment balance. In addition, the number of provisional registrations is 3, and the provisional registration period is extended to 3 weeks (the deadline for the use of the provisional registration information is 3 weeks after the first provisional registration date). Further, the cumulative deposit amount is 3000 yen. After this, the user U is not able to additionally deposit money even during the provisional registration period, and the provisional registration continuation request is not accepted. Instead, when receiving the additional deposit or the provisional registration continuation request from the user U, the authentication information management device 300 outputs a message that prompts the transition to the definitive registration.

In addition, the authentication information management device 300 may have the functions of, for example, the authentication terminal 110. That is, any one of the authentication terminals 110 to 140 may have the configuration of the authentication information management device 300.

In addition, handling at the time of providing the payment service may be changed depending on whether the user of the payment service based on face authentication is a provisional registrant or a definitive registrant. For example, it is assumed that age proof information, such as a driver's license, is registered in the personal information 3142 and the user pays for products (cigarettes or alcoholic beverages) that require age verification at the time of purchase. In this case, after the face authentication for the definitive registration succeeds in Step S332 of Fig. 12, the payment unit 344 may determine the age on the basis of the personal information 3142 of the user. In a case in which the age satisfies a condition, the payment process in Step S333 may be performed. This makes it possible to omit the verification of the age of the purchaser by, for example, a store clerk, to improve the efficiency of a payment procedure, and to make appropriate sales.

In addition, in a case in which the third condition is satisfied, the update unit 346 may notify the user terminal (not shown) possessed by the user U of the fact. For example, the provisional registration information 312 may include contact information, such as a terminal ID of the user terminal, a user ID of an application, and the email address of the user U. Then, the update unit 346 determines whether or not each piece of provisional registration information 312 in the storage unit 310 satisfies the third condition at a predetermined time. For example, it is assumed that the following are determined: a predetermined period has elapsed since the provisional registration; the payment balance is equal to or less than a predetermined amount of money; a predetermined period is left until the expiration of the deadline for the provisional registration information; the number of provisional registrations exceeds a predetermined number of times; and the privilege history exceeds a predetermined value. In this case, the update unit 346 notifies a contact (user terminal), which corresponds to the user determined to satisfy the third condition, of the fact. In addition, in a case in which the provisional registration status inquiry request is received from the user terminal, the update unit 346 may similarly notify the user terminal, which is the source of the request, of the fact. Therefore, similarly to the authentication terminal, the user terminal can make a provisional registration status inquiry and can request, for example, transition to the definitive registration, the continuation of the provisional registration, and the deletion of the provisional registration.

In addition, in a case in which the provisional registration history satisfies a predetermined condition, the usage control unit 345 may process the provisional registration information in response to a processing request from the user. In this case, first, the authentication control unit 343 controls second biometric authentication using the first biometric information for third biometric information in response to a processing request including the third biometric information from the user U. For example, the authentication terminal 110 or the like receives an operation of selecting various processing requests from the user U and transmits a processing request including the face image of the user U to the authentication information management device 300. The usage control unit 345 of the authentication information management device 300 controls the face authentication of the provisional registration information for the face image included in the received processing request. In a case in which the face authentication (second biometric authentication) of the provisional registration information has succeeded, the usage control unit 345 determines whether or not the provisional registration information related to the first biometric information satisfies the first condition. Then, the usage control unit 345 performs a process corresponding to the processing request on the provisional registration information on the basis of the determination result for the first condition. For example, it is assumed that the processing request is the provisional registration continuation request. At this time, in a case in which a predetermined period has not elapsed since the registration of the provisional registration information or in a case in which the total amount of money deposited at the time of the provisional registration is equal to or less than a predetermined value, the usage control unit 345 determines that the first condition is not satisfied and updates the provisional registration information such that the available period of the provisional registration information is extended. Alternatively, it is assumed that the processing request is the payment balance update request. At this time, in a case in which a predetermined period has not elapsed since the registration of the provisional registration information or in a case in which the total amount of money deposited at the time of the provisional registration is equal to or less than a predetermined value, the usage control unit 345 determines that the first condition is not satisfied and adds the additional deposit amount to the payment balance of the provisional registration information. In other words, in a case in which the available period of the provisional registration has passed or the total amount of money deposited at the time of the provisional registration is equal to or less than the predetermined value (in a case in which the first condition is satisfied), the extension of the deadline for the provisional registration information and the deposit of additional money to the payment balance may be disabled. Furthermore, in a case in which the provisional registration continuation request or the payment balance update request is received from the user and the first condition is satisfied, the usage control unit 345 may notify the user of the transition to the definitive registration.

In addition, the authentication terminal 110 (registration terminal) may select issuing a two-dimensional code for code payment instead of the provisional registration of the face information.

### <Third Example Embodiment>

A third example embodiment is a modified example of the second example embodiment. In the third example embodiment, biometric information can be provisionally registered by a user terminal possessed by a user, and the authentication information management device does not hold the facial feature information in the provisional registration history.

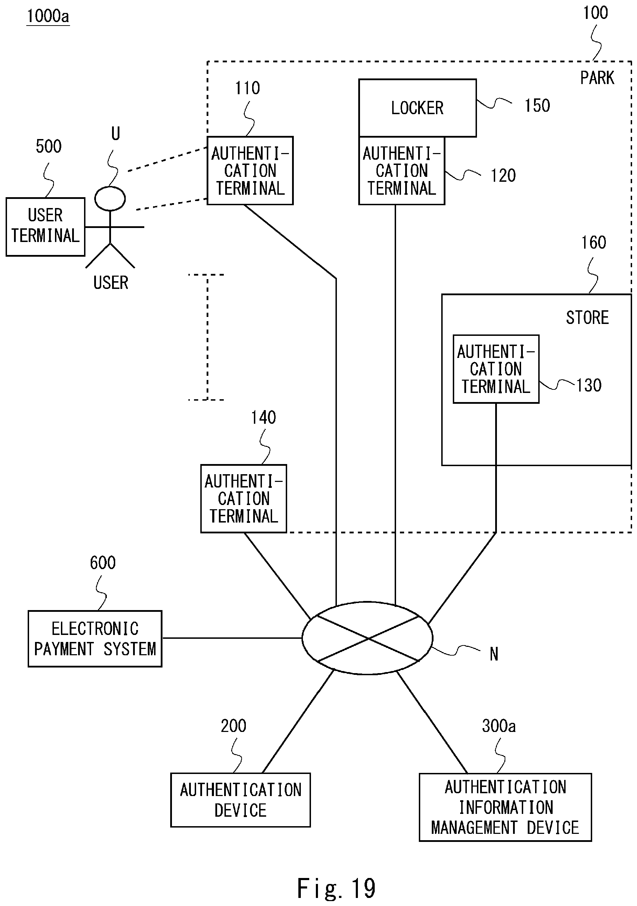

Fig. 19 is a block diagram showing an overall configuration of an authentication information management system 1000a according to the third example embodiment. The authentication information management system 1000a differs from that shown in Fig. 3 in that a user terminal 500 and an electronic payment system 600 are added and an authentication information management device 300a is changed. Since the other configurations are the same as those in Fig. 3, the illustration and detailed description of overlapping content will be omitted.

The user terminal 500 is an information terminal possessed by the user U. The user terminal 500 is, for example, an information processing device such as a mobile phone terminal, a smart phone, a tablet terminal, or a notebook computer with a camera. The user terminal 500 is an example of a registration terminal. The user terminal 500 performs registration processes corresponding to the provisional registration (first registration type) and the definitive registration (second registration type) on the authentication information management device 300. However, it is assumed that the user terminal 500 does not receive cash unlike the authentication terminal 110 and deposits (remits), for example, electronic money that can be used for electronic payment in an account of the authentication information management device 300.

The electronic payment system 600 is a known information system that manages a predetermined electronic payment. The electronic payment system 600 manages, for example, payment by electronic money, a code payment process (remittance between accounts), user information, and account information (balance information). The electronic payment system 600 may be a server that can communicate with an electronic payment application installed in the user terminal 500.

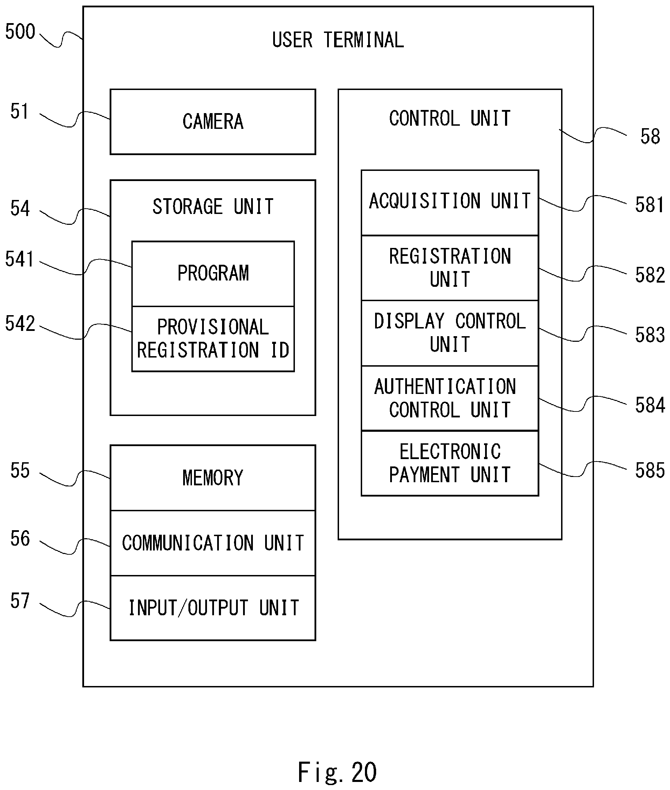

Fig. 20 is a block diagram showing a configuration of the user terminal 500 according to the third example embodiment. The user terminal 500 includes a camera 51, a storage unit 54, a memory 55, a communication unit 56, an input/output unit 57, and a control unit 58.

The camera 51 is an imaging device that images the user U under the control of the control unit 58. The storage unit 54 is a storage device that stores a program 541 for implementing each function of the user terminal 500 and a provisional registration ID 542. The program 541 is a computer program in which at least a face information registration process, a process of remitting, for example, electronic money, a provisional registration status inquiry process, and the like are implemented. The program 541 includes a client application for the authentication information management device 300a according to this example embodiment. The provisional registration ID 542 is information for identifying provisional registration information. The provisional registration ID 542 is, for example, a terminal ID of the user terminal 500, a mobile phone number set in the user terminal 500, and a user ID of the client application. The memory 55 is a volatile storage device, such as a random access memory (RAM), and is a storage area for temporarily holding information during the operation of the control unit 58. The communication unit 56 is a communication interface with the network N. The input/output unit 57 includes a display device and an input device. The input/output unit 57 is, for example, a touch panel. The control unit 58 is a processor that controls hardware included in the user terminal 500. The control unit 58 reads the program 541 from the storage unit 54 into the memory 55 and executes the program 541. Therefore, the control unit 58 implements the functions of an acquisition unit 581, a registration unit 582, a display control unit 583, an authentication control unit 584, and an electronic payment unit 585.

The acquisition unit 581 receives the selection of a registration type from the user U. In addition, the acquisition unit 581 controls the camera 51 such that a region including the face of the user U is imaged and acquires the image as the face image. Further, in a case in which the registration type is the provisional registration, the acquisition unit 581 reads the provisional registration ID 542 from the storage unit 54. Furthermore, in a case in which the registration type is the definitive registration, the acquisition unit 581 requests the user U to input personal information and payment information and acquires the input personal information and payment information.

In a case in which the registration type is the provisional registration, the registration unit 582 transmits the provisional registration request including the face image, a remittance result, and the provisional registration ID to the authentication information management device 300a. Further, in a case in which the registration type is the definitive registration, the registration unit 582 transmits the definitive registration request including the face image, the personal information, and the payment information to the authentication information management device 300a.

The display control unit 583 displays, on the input/output unit 57, the receiving screen and various types of notification information received from the authentication information management device 300a. Other specific operations of the display control unit 583 are the same as those of the display control unit 483.

The authentication control unit 584 transmits the provisional registration status inquiry request including the face image to the authentication information management device 300a when the provisional registration status inquiry is selected. Further, the authentication control unit 584 may transmit the face authentication request including the face image to the authentication information management device 300a or the authentication device 200. In other words, the authentication control unit 584 controls face authentication for the user U. In addition, the authentication control unit 584 transmits various processing requests corresponding to the notification from the display control unit 583 to the authentication information management device 300a.

In a case in which the registration type is the provisional registration, the electronic payment unit 585 receives a remittance instruction for electronic money or code payment from the user U and transmits the remittance instruction to the electronic payment system 600. Then, the electronic payment unit 585 receives the remittance result from the electronic payment system 600.

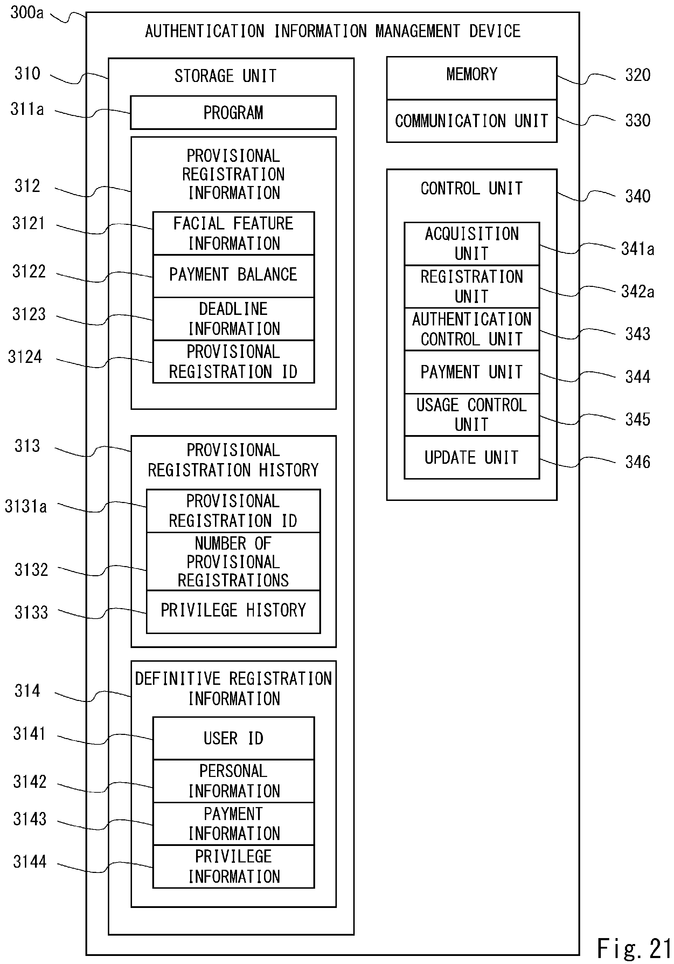

Fig. 21 is a block diagram showing a configuration of the authentication information management device 300a according to the third example embodiment. The authentication information management device 300a differs from that shown in Fig. 5 in that a provisional registration ID 3124 is added to the provisional registration information 312 and a provisional registration ID 3131a replaces the facial feature information 3131 of the provisional registration history 313. In addition, the authentication information management device 300a differs from that shown in Fig. 5 in that a program 311a, an acquisition unit 341a, and a registration unit 342a are changed. Since the other configurations are the same as those in Fig. 5, the detailed description of overlapping content will be omitted.

The program 311a is a computer program in which a process of an authentication information management method according to the third example embodiment is implemented. The provisional registration information 312 is information in which the provisional registration ID 3124 has been further associated with the facial feature information 3121. The provisional registration ID 3124 is the same information as the provisional registration ID 542 shown in Fig. 20. The provisional registration history 313 is information in which the provisional registration ID 3131a, the number of provisional registrations 3132, and the privilege history 3133 have been associated with one another. The provisional registration ID 3131 a is information equivalent to the provisional registration ID 3124.

The acquisition unit 341a is a modified example of the acquisition unit 341. The acquisition unit 341a receives (acquires), for example, a provisional registration request, a definitive registration request, a payment request, an additional deposit request, a provisional registration status inquiry request, a provisional registration continuation and deletion request, a request for transition from the provisional registration to the definitive registration (definitive registration transition request), and a payment balance update request.

The registration unit 342a is a modified example of the registration unit 342. The registration unit 342a adds the provisional registration ID 3124 included in the provisional registration request to the provisional registration information 312 in response to the provisional registration request, in addition to generating the provisional registration information 312 similarly to the registration unit 342. In addition, the registration unit 342a generates the provisional registration history 313, using the provisional registration ID 3124 as the provisional registration ID 3131a, according to the registration of the provisional registration information 312. Further, the registration unit 342a generates the provisional registration history 313 similarly to the registration unit 342.

In particular, in a case in which the second condition is satisfied, the registration unit 342a generates the provisional registration information 312 to which predetermined privilege information has been given. Specifically, in a case in which the provisional registration ID included in the provisional registration request has not been registered in the provisional registration history 313, the registration unit 342a determines that the second condition is satisfied. Alternatively, even when the provisional registration ID included in the provisional registration request has been registered in the provisional registration history 313, in a case in which the number of provisional registrations 3132 is equal to or less than a predetermined number of times or in a case in which the privilege history 3133 is equal to or less than a predetermined value, the registration unit 342a determines that the second condition is satisfied. Further, in a case in which the predetermined number of times is 1, that is, in a case in which a privilege is granted to a specific user only for the first provisional registration request, in the provisional registration history 313, only the provisional registration ID 3131a may be managed, and the number of provisional registrations 3132 and the privilege history 3133 may be unnecessary.

Furthermore, the registration unit 342a performs processes corresponding to the privilege granting request, the definitive registration request, and the definitive registration transition request, similarly to the registration unit 342.

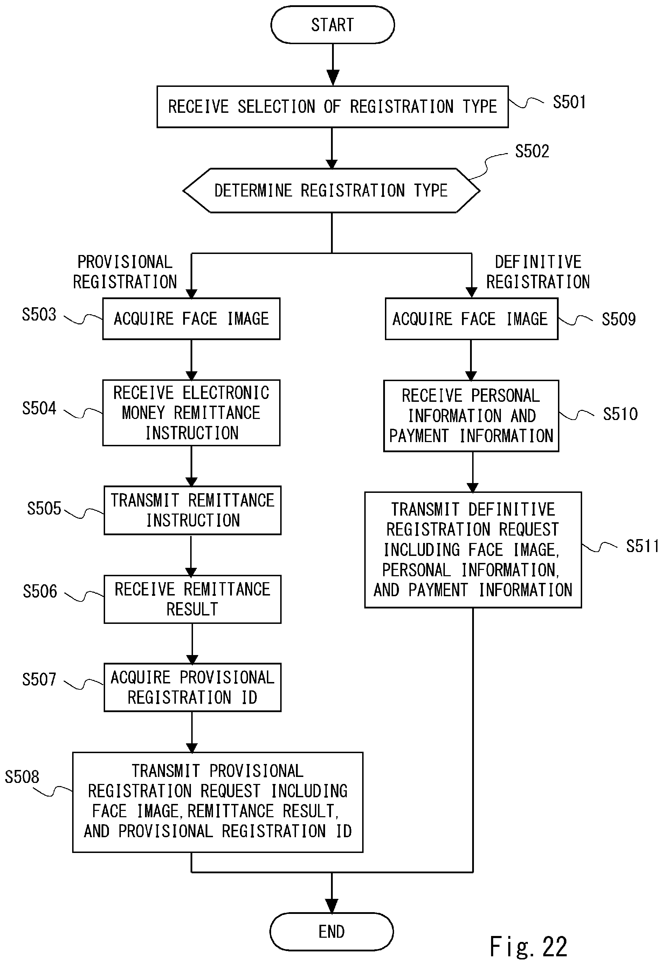

Fig. 22 is a flowchart showing a flow of a face information registration process by the user terminal 500 according to the third example embodiment. First, the user terminal 500 displays the receiving screen. Then, the acquisition unit 581 of the user terminal 500 receives the selection of the registration type by the operation of the user U (S501). Then, the acquisition unit 581 determines the registration type (S502). In a case in which the registration type is the provisional registration, the acquisition unit 581 acquires the face image of the user U captured by the camera 51 (S503).

Then, the electronic payment unit 585 of the user terminal 500 prompts the user U to remit a predetermined amount of electronic money through the receiving screen or voice. Here, a remittance destination account is an account that is managed by a company of operating the park 100 and the authentication information management device 300a. The electronic payment unit 585 receives a remittance instruction for electronic money or code payment from the user U

(S504). For example, the electronic payment unit 585 receives an instruction to remit a predetermined amount of money to the remittance destination account from the user U through a screen of a predetermined code payment application.

The electronic payment unit 585 transmits the remittance instruction including, for example, the user ID of the user U (remittance source account information), remittance destination account information, and a remittance amount to the electronic payment system 600 through the network N (S505). In accordance with this, the electronic payment system 600 performs a remittance process (which moves and updates money amount information between accounts) corresponding to the remittance instruction and returns a remittance result to the user terminal 500. The remittance result is information certifying that a predetermined amount of money has been deposited (remitted) from the user U to the account of the operating company by a predetermined electronic payment. That is, the remittance result includes the deposit amount. Then, the electronic payment unit 585 receives the remittance result from the electronic payment system 600 (S506).

Then, the acquisition unit 581 reads and acquires the provisional registration ID 542 from the storage unit 54 (S507). Then, the registration unit 582 transmits the provisional registration request including the face image acquired in Step S503, the remittance result received in Step S506, and the provisional registration ID acquired in Step S507 to the authentication information management device 300a through the network N (S508).

In a case in which the registration type is the definitive registration in Step S502, the acquisition unit 581 acquires the face image of the user U captured by the camera 51 (S509). Then, the user terminal 500 displays input fields for personal information and payment information on the receiving screen and requests the user U to input the information. The acquisition unit 581 receives the personal information and the payment information input by the user U through the receiving screen (S510). Then, the registration unit 582 transmits the definitive registration request including the face image acquired in Step S509 and the personal information and the payment information acquired in Step S510 to the authentication information management device 300a through the network N (S511). In addition, Steps S503 and S509 may be performed before Step S501.

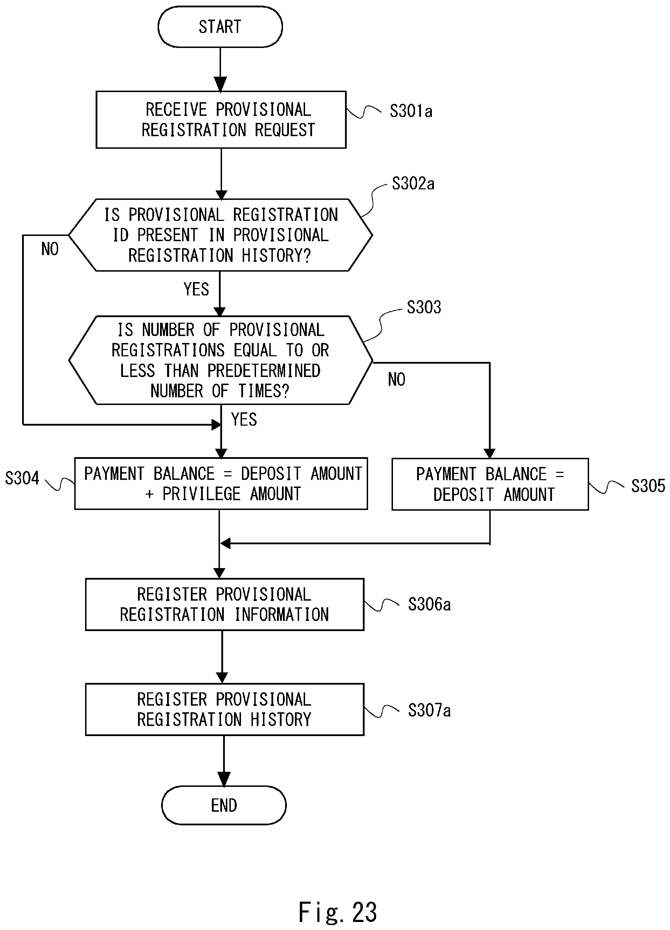

Fig. 23 is a flowchart showing a flow of a provisional registration process according to the third example embodiment. First, the acquisition unit 341a of the authentication information management device 300a receives the provisional registration request from the user terminal 500 through the network N (S301a). In addition, the acquisition unit 341a may receive various processing requests from, for example, the user terminal 500, determine the type of the received request, and determine that the received request is the provisional registration request. Further, the determination of the type of the received request by the acquisition unit 341a is also the same in other processes.

The registration unit 342a acquires the provisional registration ID from the received provisional registration request. Then, the registration unit 342a determines whether or not the acquired provisional registration ID is present in the provisional registration ID 3131a of the provisional registration history 313 (S302a). In a case in which the provisional registration ID is not present in the provisional registration history 313, the process proceeds to Step S304. On the other hand, in a case in which the provisional registration ID is present in the provisional registration history 313 in Step S302a, the registration unit 342a determines whether or not the number of provisional registrations is equal to or less than a predetermined number of times (S303). Further, instead of Step S303, the registration unit 342a may determine whether or not the cumulative value of the granted privilege amount in the privilege history 3133 is equal to or less than a predetermined value. Then, Steps S304 and S305 are processed in the same manner as those in Fig. 8.

After Step S304 or S305, the registration unit 342a acquires the face image from the received provisional registration request and extracts facial feature information from the face image. Then, the registration unit 342a associates the extracted facial feature information 3121, the payment balance 3122 in Step S304 or S305, the deadline information 3123, and the provisional registration ID 3124 to generate the provisional registration information 312. Then, the registration unit 342a registers the generated provisional registration information 312 in the storage unit 310 (S306a). Further, the registration unit 342a associates the provisional registration ID 3124 (3131a) included in the generated provisional registration information 312, the number of provisional registrations 3132, and the privilege history 3133 to generate the provisional registration history 313. Then, the registration unit 342a registers the provisional registration history 313 (S307a). In addition, in a case in which the provisional registration is the second or subsequent provisional registration and the number of provisional registrations is equal to or less than the predetermined number of times (YES in Step S303), the registration unit 342a adds "1" to the number of provisional registrations 3132 of the provisional registration history 313 specified in Step S302 and adds the privilege amount added in Step S304 to the privilege history 3133 to update the provisional registration history 313.

As described above, the third example embodiment has the following effects in addition to the effects of the first and second example embodiments. First, biometric information can be provisionally registered by the user terminal possessed by the user. Therefore, a threshold for the provisional registration is reduced, and information registration for the payment service using the provisional registration information is promoted. In addition, since the authentication information management device does not need to hold the facial feature information in the provisional registration history, it is possible to reduce concern about temporarily registering biometric information at the time of the provisional registration.

### <Fourth Example Embodiment>

A fourth example embodiment is a modified example of the third example embodiment. In the fourth example embodiment, the user terminal holds the number of provisional registrations, and the user terminal controls whether or not to perform the granting of a privilege by the provisional registration. Therefore, the authentication information management device does not hold the provisional registration history. An authentication information management system according to the fourth example embodiment differs from that shown in Fig. 19 in that a user terminal 500b and an authentication information management device 300b are changed. In addition, since the other configurations of the authentication information management system according to the fourth example embodiment are the same as those in Fig. 19, the illustration and detailed description of overlapping content will be omitted.

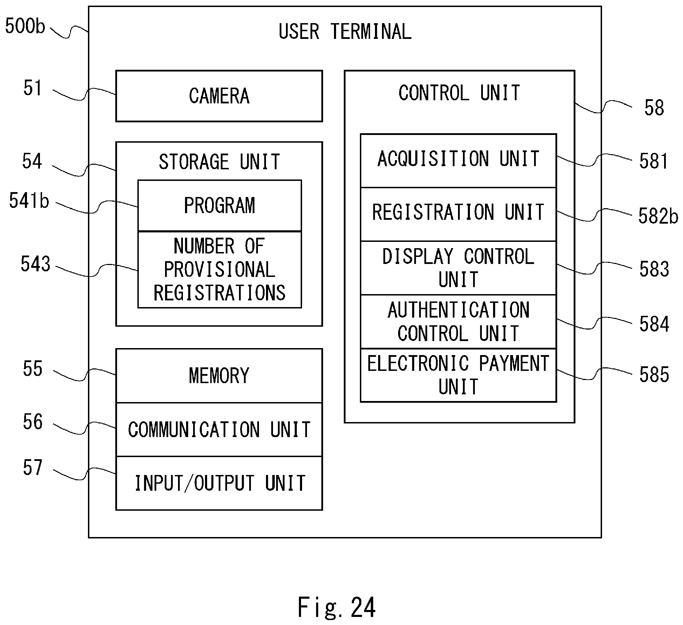

Fig. 24 is a block diagram showing a configuration of the user terminal 500b according to the fourth example embodiment. The user terminal 500b is a modified example of the user terminal 500. The user terminal 500b differs from the user terminal 500 in that the number of provisional registrations 543 replaces the provisional registration ID 542 and a program 541b and a registration unit 582b are changed. Since the other configurations are the same as those in Fig. 20, the detailed description of overlapping content will be omitted.

The program 541b includes a client application for the authentication information management device 300b according to this example embodiment. The number of provisional registrations 543 is the number of times the user U of the user terminal 500b or the client application registers the provisional registration information.

In a case in which the registration type is the provisional registration, the registration unit 582b sets a privilege flag according to the number of provisional registrations 543. Then, the registration unit 582b transmits a provisional registration request including the face image, the remittance result, and the number of provisional registrations to the authentication information management device 300b. Further, in a case in which the registration type is the definitive registration, the registration unit 582b transmits a definitive registration request including the face image, the personal information, and the payment information to the authentication information management device 300b.

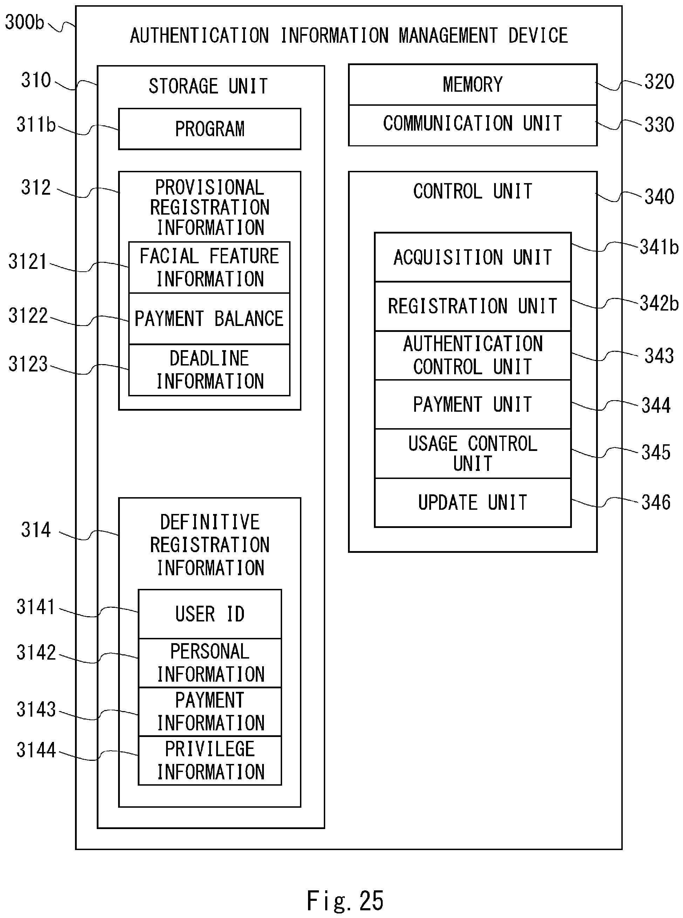

Fig. 25 is a block diagram showing a configuration of the authentication information management device 300b according to the fourth example embodiment. The authentication information management device 300b differs from those shown in Figs. 5 and 21 in that the provisional registration history 313 is deleted. The provisional registration information 312 is the same as that shown in Fig. 5, and the provisional registration ID 3124 is unnecessary. In addition, the authentication information management device 300b differs from that shown in Fig. 21 in that a program 311b, an acquisition unit 341b, and a registration unit 342b are changed.

The program 311b is a computer program in which a process of an authentication information management method according to the fourth example embodiment is implemented.

The acquisition unit 341b is a modified example of the acquisition unit 341b. The acquisition unit 341b receives (acquires), for example, a provisional registration request, a definitive registration request, a payment request, an additional deposit request, a provisional registration status inquiry request, a provisional registration continuation and deletion request, a request for transition from the provisional registration to the definitive registration (definitive registration transition request), and a payment balance update request.

The registration unit 342b is a modified example of the registration unit 342 or 342a. In a case in which the acquisition unit 341b acquires the provisional registration request, the registration unit 342b generates the provisional registration information 312 and registers it in the storage unit 310, similarly to the registration unit 342. In particular, in a case in which the privilege flag included in the provisional registration request indicates ON, the registration unit 342b determines that the second condition is satisfied. That is, in a case in which the privilege flag included in the provisional registration request indicates ON, the registration unit 342b registers the provisional registration information 312 to which predetermined privilege information has been given. Furthermore, the registration unit 342b performs processes corresponding to the privilege granting request, the definitive registration request, and the definitive registration transition request, similarly to the registration unit 342.

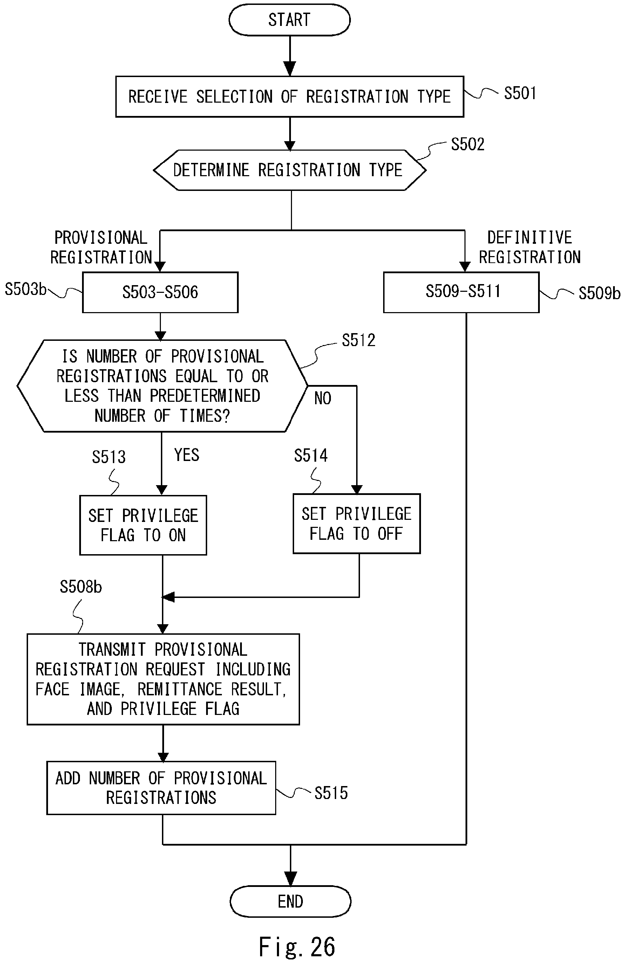

Fig. 26 is a flowchart showing a flow of a face information registration process by the user terminal 500b according to the fourth example embodiment. In addition, the description of the same process as that shown in Fig. 22 will be omitted as appropriate.

First, the user terminal 500b performs Steps S501 and S502 as in Fig. 22. In a case in which the registration type is the provisional registration, the user terminal 500b performs Steps S503 to S506 (S503b) as in Fig. 22. Then, the registration unit 582b of the user terminal 500b determines whether or not the number of provisional registrations 543 in the storage unit 54 is equal to or less than a predetermined number of times (S512). In a case in which the number of provisional registrations 543 is equal to or less than the predetermined number of times, the registration unit 582b sets the privilege flag to ON (S513). In a case in which the number of provisional registrations 543 is greater than the predetermined number of times in Step S512, the registration unit 582b sets the privilege flag to OFF (S514).

Then, the registration unit 582b transmits the provisional registration request including the face image acquired in Step S503, the remittance result received in Step S506, and the privilege flag set in Step S513 or S514 to the authentication information management device 300b through the network N (S508b). Then, the registration unit 582b adds "1" to the number of provisional registrations 543 to update the number of provisional registrations 543 (S515). Further, in a case in which the registration type is the definitive registration in Step S502, the user terminal 500b performs Steps S509 to S511 (S509b) as in Fig. 22.

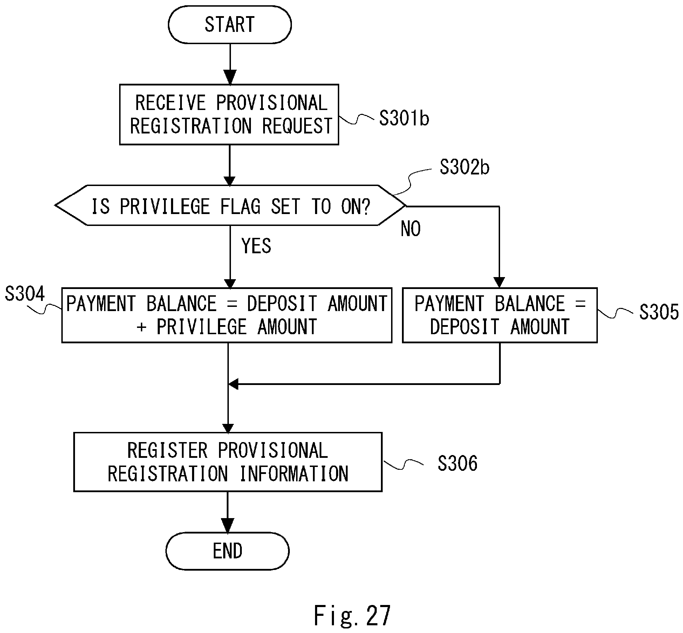

Fig. 27 is a flowchart showing a flow of a provisional registration process according to the fourth example embodiment. First, the acquisition unit 341b of the authentication information management device 300b receives the provisional registration request from the user terminal 500b through the network N (S301b). In addition, the acquisition unit 341b may receive various processing requests from, for example, the user terminal 500b, determine the type of the received request, and determine that the received request is the provisional registration request. Further, the determination of the type of the received request by the acquisition unit 341b is also the same in other processes.

The registration unit 342b acquires the privilege flag from the received provisional registration request. Then, the registration unit 342b determines whether or not the acquired privilege flag is set to ON (S302b). In a case in which the privilege flag is set to ON, the process proceeds to Step S304. On the other hand, in a case in which the privilege flag is set to OFF, the process proceeds to Step S305. Steps S304 and S305 are processed in the same manner as those in Fig. 8.

After Step S304 or S305, the registration unit 342b acquires the face image from the received provisional registration request and extracts facial feature information from the face image. Then, the registration unit 342b associates the extracted facial feature information 3121, the payment balance 3122 in Step S304 or S305, and the deadline information 3123 to generate the provisional registration information 312. Then, the registration unit 342b registers the generated provisional registration information 312 in the storage unit 310 (S306).

As described above, the fourth example embodiment has the following effects in addition to the effects of the first to third example embodiments. First, since the user terminal holds the number of provisional registrations, the user terminal can control whether or not to perform the granting of a privilege by the provisional registration. Therefore, the authentication information management device can determine whether or not the privilege granting condition (second condition) is satisfied for each provisional registration request on the basis of whether the privilege flag is set to ON or OFF. Therefore, it is possible to simplify the determination process for the second condition in the authentication information management device. In particular, since the authentication information management device does not need to hold the provisional registration history, it is possible to reduce concern about temporarily registering biometric information at the time of the provisional registration.

### <Other Example Embodiments>

Further, in the second to fourth example embodiments, the authentication information management device 300 and the like and the authentication device 200 are separate information processing devices. However, they may be the same device. For example, the authentication information management device 300 may further associate the facial feature information with the user ID 3141 of the definitive registration information 314 to register the facial feature information. In this case, the control unit 340 may include the face detection unit 220, the feature point extraction unit 230, the registration unit 240, and the authentication unit 250 shown in Fig. 6. In addition, the facial feature information 3121 of the provisional registration information and the facial feature information 212 of the definitive registration information may be managed in the same DB. In this case, for example, flags may be added to the pieces of facial feature information such that the facial feature information for the provisional registration can be distinguished from the facial feature information for the definitive registration, and the pieces of facial feature information may be managed. Then, at the time of authentication, the facial feature information for the provisional registration and the facial feature information for the definitive registration may be distinguished and collated.

Alternatively, the provisional registration information 312, the provisional registration history 313, and the definitive registration information 314 may be stored in an external storage device that is connected to the authentication device 200 or the authentication information management device 300.

As a modified example of the fourth example embodiment, the authentication terminal 110 (registration terminal) may transmit the provisional registration request including the privilege flag. For example, at the entrance of the park 100, the staff of the park 100 asks the user U, who wants to make the provisional registration, to present personal identification information, such as an identification card, and separately records the personal information and provisional registration history (for example, the number of provisional registrations) of the user U on a ledger or the like. Then, the staff checks the provisional registration history of the user U from the ledger or the like and determines whether or not the user U is to be granted the privilege. The staff inputs, to the authentication terminal 110, whether or not the user U is to be granted the privilege, and the user U performs a provisional registration operation. In accordance with this, the authentication terminal 110 transmits the provisional registration request including the privilege flag to the authentication information management device 300b. Therefore, the authentication information management device 300b can determine whether or not the user U is to be granted the privilege and then perform a process, without holding the provisional registration history. In addition, the privilege flag may be included in the definitive registration request.

In addition, in the above-described example embodiments, the configuration of the hardware has been described, but the present disclosure is not limited thereto. The present disclosure can also be implemented by causing a CPU to execute a computer program.

In the above-described examples, the program can be stored using any of various types of non-transitory computer-readable media to be supplied to a computer. The non-transitory computer-readable media include various types of tangible storage media. Examples of the non-transitory computer-readable media include a magnetic recording medium (for example, a flexible disk, a magnetic tape, or a hard disk drive), a magneto-optical recording medium (for example, a magneto-optical disc), a CD-read only memory (CD-ROM), a CD-R, a CD-R/W, a digital versatile disc (DVD), and semiconductor memories (for example, a mask ROM, a programmable ROM (PROM), an erasable PROM (EPROM), a flash ROM, and a random access memory (RAM)). In addition, the program may be supplied to the computer by any of various types of transitory computer-readable media. Examples of the transitory computer-readable media include electrical signals, optical signals, and electromagnetic waves. The transitory computer readable media can provide the program to the computer through a wired communication line, such as an electric wire or optical fibers, or a wireless communication line.

In addition, the present disclosure is not limited to the above-described example embodiments and can be appropriately changed without departing from the gist. Further, the present disclosure may be implemented by appropriately combining the above-described example embodiments.

Some or all of the above-described example embodiments may be described as the following supplementary notes, but are not limited to the following.
(Supplementary Note 1) An authentication information management device including:
   an acquisition unit configured to acquire a provisional registration request including first biometric information of a user and a deposit amount;
   a registration unit configured to register provisional registration information in which a payment balance based on the deposit amount included in the provisional registration request has been associated with the first biometric information;
   an authentication control unit configured to control first biometric authentication using the first biometric information for second biometric information in response to a payment request including the second biometric information and a payment amount;
   a payment unit configured to pay the payment amount using the payment balance associated with the first biometric information in a case in which the first biometric authentication has succeeded; and
   a usage control unit configured to control a use of the provisional registration information according to a result of determining whether or not the provisional registration information satisfies a first condition.
(Supplementary Note 2) The authentication information management device according to Supplementary Note 1, in which the usage control unit restricts the use of the provisional registration information in a case in which the provisional registration information satisfies the first condition.
(Supplementary Note 3) The authentication information management device according to Supplementary Note 2, in which the usage control unit deletes the provisional registration information to restrict the use of the provisional registration information.
(Supplementary Note 4) The authentication information management device according to Supplementary Note 2 or 3, in which, in a case in which a predetermined period has elapsed since the registration of the provisional registration information, the usage control unit determines that the provisional registration information satisfies the first condition and restricts the use of the provisional registration information.
(Supplementary Note 5) The authentication information management device according to any one of Supplementary Notes 2 to 4, in which, in a case in which the payment balance after payment is equal to or less than a predetermined amount of money, the usage control unit determines that the provisional registration information satisfies the first condition and restricts the use of the provisional registration information.
(Supplementary Note 6) The authentication information management device according to any one of Supplementary Notes 1 to 5, in which
   the authentication control unit controls second biometric authentication using the first biometric information for third biometric information in response to a processing request including the third biometric information from the user, and
   in a case in which the second biometric authentication has succeeded, the usage control unit determines whether or not the provisional registration information related to the first biometric information satisfies the first condition and performs a process corresponding to the processing request on the provisional registration information on the basis of a determination result for the first condition.
(Supplementary Note 7) The authentication information management device according to Supplementary Note 6, in which
   the processing request is a provisional registration continuation request, and
   in a case in which a predetermined period has not elapsed since the registration of the provisional registration information, the usage control unit determines that the provisional registration information does not satisfy the first condition and updates the provisional registration information such that an available period of the provisional registration information is extended.
(Supplementary Note 8) The authentication information management device according to any one of Supplementary Notes 1 to 7, in which, in a case in which information included in the provisional registration request satisfies a second condition, the registration unit registers the provisional registration information to which predetermined privilege information has been given.
(Supplementary Note 9) The authentication information management device according to Supplementary Note 8, in which the registration unit gives the privilege information by adding a privilege amount to the deposit amount to calculate the payment balance.
(Supplementary Note 10) The authentication information management device according to Supplementary Note 8 or 9, in which the registration unit
   registers the first biometric information in a provisional registration history according to the registration of the provisional registration information, and
   gives the privilege information in a case in which the provisional registration history that corresponds to biometric information included in a subsequent provisional registration request acquired after the registration satisfies the second condition.
(Supplementary Note 11) The authentication information management device according to Supplementary Note 10, in which the registration unit
   registers, in the provisional registration history, the number of times the user makes the provisional registration request or a cumulative value of the given privilege information, and
   determines that the provisional registration history satisfies the second condition in a case in which the number of requests is equal to or less than a predetermined number of times or the cumulative value is equal to or less than a predetermined value.
(Supplementary Note 12) The authentication information management device according to any one of Supplementary Notes 1 to 11, in which
   the acquisition unit acquires a definitive registration request including the first biometric information, personal information, and payment information from the user, and
   the registration unit registers definitive registration information in which the first biometric information, the personal information, and the payment information have been associated with one another and to which predetermined privilege information has been given.
(Supplementary Note 13) The authentication information management device according to Supplementary Note 12, in which, in a case in which the user did not make the provisional registration request in the past, the registration unit registers the definitive registration information to which predetermined privilege information has been given.
(Supplementary Note 14) The authentication information management device according to any one of Supplementary Notes 1 to 13, in which, in a case in which the payment balance is insufficient with respect to the payment amount, the payment unit notifies a source of the payment request of a shortage, and in a case in which an additional deposit amount is received from the source of the payment request, the payment unit pays the payment amount using the payment balance and the additional deposit amount.
(Supplementary Note 15) The authentication information management device according to any one of Supplementary Notes 1 to 14, further including an update unit configured to, in a case in which the provisional registration information satisfies a third condition, notify the user of the fact and update the provisional registration information on the basis of a response from the user.
(Supplementary Note 16) The authentication information management device according to Supplementary Note 15, in which, in a case in which the response indicates continuation of the provisional registration, the update unit updates the provisional registration information such that the available period of the provisional registration information is extended.
(Supplementary Note 17) The authentication information management device according to Supplementary Note 16, in which the update unit extends the available period and adds predetermined privilege information to update the provisional registration information.
(Supplementary Note 18) The authentication information management device according to any one of Supplementary Notes 15 to 17, in which,
   in a case in which the response indicates a definitive registration transition request including the first biometric information, personal information, and payment information, the update unit deletes the provisional registration information including the first biometric information, and
   the registration unit registers definitive registration information in which the first biometric information, the personal information, and the payment information have been associated with one another.
(Supplementary Note 19) The authentication information management device according to Supplementary Note 18, in which the registration unit registers the definitive registration information to which predetermined privilege information has been given.
(Supplementary Note 20) An authentication information management system including:
   a registration terminal configured to receive first biometric information and a deposit of a predetermined amount of money from a user;
   an authentication information management device; and
   a payment terminal configured to receive second biometric information from a user who makes a payment, in which
   the registration terminal transmits a provisional registration request including the first biometric information and a deposit amount to the authentication information management device,
   the authentication information management device registers provisional registration information in which a payment balance based on the deposit amount included in the provisional registration request received from the registration terminal has been associated with the first biometric information,
   the payment terminal transmits a payment request including the second biometric information and a payment amount to the authentication information management device, and
   the authentication information management device
   controls first biometric authentication using the first biometric information for the second biometric information in response to the payment request received from the payment terminal,
   pays the payment amount using the payment balance associated with the first biometric information in a case in which the first biometric authentication has succeeded, and
   controls a use of the provisional registration information according to a result of determining whether or not the provisional registration information satisfies a first condition.
(Supplementary Note 21) The authentication information management system according to Supplementary Note 20, in which the authentication information management device restricts the use of the provisional registration information in a case in which the provisional registration information satisfies the first condition.
(Supplementary Note 22) An authentication information management method executed by a computer, the authentication information management method including:
   acquiring a provisional registration request including first biometric information of a user and a deposit amount;
   registering provisional registration information in which a payment balance based on the deposit amount included in the provisional registration request has been associated with the first biometric information;
   controlling first biometric authentication using the first biometric information for second biometric information in response to a payment request including the second biometric information and a payment amount;
   paying the payment amount using the payment balance associated with the first biometric information in a case in which the first biometric authentication has succeeded; and
   controlling a use of the provisional registration information according to a result of determining whether or not the provisional registration information satisfies a first condition.
(Supplementary Note 23) An authentication information management program causing a computer to execute:
   a process of acquiring a provisional registration request including first biometric information of a user and a deposit amount;
   a process of registering provisional registration information in which a payment balance based on the deposit amount included in the provisional registration request has been associated with the first biometric information;
   a process of controlling first biometric authentication using the first biometric information for second biometric information in response to a payment request including the second biometric information and a payment amount;
   a process of paying the payment amount using the payment balance associated with the first biometric information in a case in which the first biometric authentication has succeeded; and
   a process of controlling a use of the provisional registration information according to a result of determining whether or not the provisional registration information satisfies a first condition.

The present invention has been described with reference to the example embodiments (and examples). However, the present invention is not limited to the above-described example embodiments (and examples). Various changes that can be understood by those skilled in the art can be made to the configurations and details of the present invention within the scope of the present invention.

This application claims priority based on Japanese Patent Application No. 2021-025719 filed on February 19, 2021, and the entire disclosure thereof is incorporated herein.

### Reference Signs List

- 1: AUTHENTICATION INFORMATION MANAGEMENT DEVICE
- 11: ACQUISITION UNIT
- 12: REGISTRATION UNIT
- 13: AUTHENTICATION CONTROL UNIT
- 14: PAYMENT UNIT
- 15: USAGE CONTROL UNIT
- 1000: AUTHENTICATION INFORMATION MANAGEMENT SYSTEM
- 1000a: AUTHENTICATION INFORMATION MANAGEMENT SYSTEM
- U: USER
- N: NETWORK
- 100: PARK
- 110: AUTHENTICATION TERMINAL
- 120: AUTHENTICATION TERMINAL
- 130: AUTHENTICATION TERMINAL
- 140: AUTHENTICATION TERMINAL
- 150: LOCKER
- 160: STORE
- 200: AUTHENTICATION DEVICE
- 210: FACE INFORMATION DB
- 211: USER ID
- 212: FACIAL FEATURE INFORMATION
- 220: FACE DETECTION UNIT
- 230: FEATURE POINT EXTRACTION UNIT
- 240: REGISTRATION UNIT
- 250: AUTHENTICATION UNIT
- 300: AUTHENTICATION INFORMATION MANAGEMENT DEVICE
- 310: STORAGE UNIT
- 311: PROGRAM
- 312: PROVISIONAL REGISTRATION INFORMATION
- 3121: FACIAL FEATURE INFORMATION
- 3122: PAYMENT BALANCE
- 3123: DEADLINE INFORMATION
- 313: PROVISIONAL REGISTRATION HISTORY
- 3131: FACIAL FEATURE INFORMATION
- 3132: NUMBER OF PROVISIONAL REGISTRATIONS
- 3133: PRIVILEGE HISTORY
- 314: DEFINITIVE REGISTRATION INFORMATION
- 3141: USERID
- 3142: PERSONAL INFORMATION
- 3143: PAYMENT INFORMATION
- 3144: PRIVILEGE INFORMATION
- 320: MEMORY
- 330: COMMUNICATION UNIT
- 340: CONTROL UNIT
- 341: ACQUISITION UNIT
- 342: REGISTRATION UNIT
- 343: AUTHENTICATION CONTROL UNIT
- 344: PAYMENT UNIT
- 345: USAGE CONTROL UNIT
- 346: UPDATE UNIT
- 41: CAMERA
- 42: DEPOSIT RECEIVING UNIT
- 43: CASH STORAGE UNIT
- 44: STORAGE UNIT
- 441: PROGRAM
- 45: MEMORY
- 46: COMMUNICATION UNIT
- 47: INPUT/OUTPUT UNIT
- 48: CONTROL UNIT
- 481: ACQUISITION UNIT
- 482: REGISTRATION UNIT
- 483: DISPLAY CONTROL UNIT
- 484: AUTHENTICATION CONTROL UNIT
- 485: PAYMENT PROCESSING UNIT
- 300a: AUTHENTICATION INFORMATION MANAGEMENT DEVICE
- 311a: PROGRAM
- 3124: PROVISIONAL REGISTRATION ID
- 3131a: PROVISIONAL REGISTRATION ID
- 341a: ACQUISITION UNIT
- 342a: REGISTRATION UNIT
- 500: USER TERMINAL
- 51: CAMERA
- 54: STORAGE UNIT
- 541: PROGRAM
- 542: PROVISIONAL REGISTRATION ID
- 55: MEMORY
- 56: COMMUNICATION UNIT
- 57: INPUT/OUTPUT UNIT
- 58: CONTROL UNIT
- 581: ACQUISITION UNIT
- 582: REGISTRATION UNIT
- 583: DISPLAY CONTROL UNIT
- 584: AUTHENTICATION CONTROL UNIT
- 585: ELECTRONIC PAYMENT UNIT
- 600: ELECTRONIC PAYMENT SYSTEM
- 300b: AUTHENTICATION INFORMATION MANAGEMENT DEVICE
- 311b: PROGRAM
- 341b: ACQUISITION UNIT
- 342b: REGISTRATION UNIT
- 500b: USER TERMINAL
- 541b: PROGRAM
- 543: NUMBER OF PROVISIONAL REGISTRATIONS
- 582b: REGISTRATION UNIT
- 7: PROVISIONAL REGISTRATION STATUS DISPLAY SCREEN
- 71: FACE IMAGE
- 72: PROVISIONAL REGISTRATION STATUS
- 721: PAYMENT BALANCE
- 722: PROVISIONAL REGISTRATION DATE
- 723: PROVISIONAL REGISTRATION PERIOD
- 724: NUMBER OF PROVISIONAL REGISTRATIONS
- 725: GRANTED PRIVILEGE HISTORY
- 726: CUMULATIVE DEPOSITION AMOUNT HISTORY
- 73: REMAINDERS UNTIL USAGE RESTRICTION
- 731: DEPOSITABLE AMOUNT
- 733: REMAINING PROVISIONAL REGISTRATION PERIOD
- 734: REMAINING NUMBER OF PROVISIONAL REGISTRATIONS
- 735: GRANT ABLE PRIVILEGE AMOUNT
- 74: DEFINITIVE REGISTRATION TRANSITION FIELD
- 741: SELECTION BUTTON
- 742: DEFINITIVE REGISTRATION TRANSITION REQUEST MESSAGE
- 743: PRIVILEGE GRANTING GUIDANCE MESSAGE
- 75: ADDITIONAL DEPOSIT FIELD
- 751: SELECTION BUTTON
- 752: ADDITIONAL DEPOSIT REQUEST MESSAGE
- 753: PRIVILEGE GRANTING GUIDANCE MESSAGE
- 754: DEPOSITABLE AMOUNT
- 76: PROVISIONAL REGISTRATION CONTINUATION FIELD
- 761: SELECTION BUTTON
- 762: PROVISIONAL REGISTRATION CONTINUATION REQUEST MESSAGE
- 763: PRIVILEGE GRANTING GUIDANCE MESSAGE
- 77: PROVISIONAL REGISTRATION DELETION FIELD
- 771: SELECTION BUTTON
- 772: PROVISIONAL REGISTRATION DELETION CONFIRMATION MESSAGE

## Claims

1. An authentication information management device comprising:
an acquisition means for acquiring a provisional registration request including first biometric information of a user and a deposit amount;
a registration means for registering provisional registration information in which a payment balance based on the deposit amount included in the provisional registration request has been associated with the first biometric information;
an authentication control means for controlling first biometric authentication using the first biometric information for second biometric information in response to a payment request including the second biometric information and a payment amount;
a payment means for paying the payment amount using the payment balance associated with the first biometric information in a case in which the first biometric authentication has succeeded; and
a usage control means for controlling a use of the provisional registration information according to a result of determining whether or not the provisional registration information satisfies a first condition.

2. The authentication information management device according to claim 1, wherein the usage control means restricts the use of the provisional registration information in a case in which the provisional registration information satisfies the first condition.

3. The authentication information management device according to claim 2, wherein the usage control means deletes the provisional registration information to restrict the use of the provisional registration information.

4. The authentication information management device according to claim 2 or 3, wherein, in a case in which a predetermined period has elapsed since the registration of the provisional registration information, the usage control means determines that the provisional registration information satisfies the first condition and restricts the use of the provisional registration information.

5. The authentication information management device according to any one of claims 2 to 4, wherein, in a case in which the payment balance after payment is equal to or less than a predetermined amount of money, the usage control means determines that the provisional registration information satisfies the first condition and restricts the use of the provisional registration information.

6. The authentication information management device according to any one of claims 1 to 5, wherein
the authentication control means controls second biometric authentication using the first biometric information for third biometric information in response to a processing request including the third biometric information from the user, and
in a case in which the second biometric authentication has succeeded, the usage control means determines whether or not the provisional registration information related to the first biometric information satisfies the first condition and performs a process corresponding to the processing request on the provisional registration information on the basis of a determination result for the first condition.

7. The authentication information management device according to claim 6, wherein
the processing request is a provisional registration continuation request, and
in a case in which a predetermined period has not elapsed since the registration of the provisional registration information, the usage control means determines that the provisional registration information does not satisfy the first condition and updates the provisional registration information such that an available period of the provisional registration information is extended.

8. The authentication information management device according to any one of claims 1 to 7, wherein, in a case in which information included in the provisional registration request satisfies a second condition, the registration means registers the provisional registration information to which predetermined privilege information has been given.

9. The authentication information management device according to claim 8, wherein the registration means gives the privilege information by adding a privilege amount to the deposit amount to calculate the payment balance.

10. The authentication information management device according to claim 8 or 9, wherein the registration means
registers the first biometric information in a provisional registration history according to the registration of the provisional registration information, and
gives the privilege information in a case in which the provisional registration history that corresponds to biometric information included in a subsequent provisional registration request acquired after the registration satisfies the second condition.

11. The authentication information management device according to claim 10, wherein the registration means
registers, in the provisional registration history, the number of times the user makes the provisional registration request or a cumulative value of the given privilege information, and
determines that the provisional registration history satisfies the second condition in a case in which the number of requests is equal to or less than a predetermined number of times or the cumulative value is equal to or less than a predetermined value.

12. The authentication information management device according to any one of claims 1 to 11, wherein
the acquisition means acquires a definitive registration request including the first biometric information, personal information, and payment information from the user, and
the registration means registers definitive registration information in which the first biometric information, the personal information, and the payment information have been associated with one another and to which predetermined privilege information has been given.

13. The authentication information management device according to claim 12, wherein, in a case in which the user did not make the provisional registration request in the past, the registration means registers the definitive registration information to which predetermined privilege information has been given.

14. The authentication information management device according to any one of claims 1 to 13, wherein, in a case in which the payment balance is insufficient with respect to the payment amount, the payment means notifies a source of the payment request of a shortage, and in a case in which an additional deposit amount is received from the source of the payment request, the payment means pays the payment amount using the payment balance and the additional deposit amount.

15. The authentication information management device according to any one of claims 1 to 14, further comprising an update means for, in a case in which the provisional registration information satisfies a third condition, notifying the user of the fact and updating the provisional registration information on the basis of a response from the user.

16. The authentication information management device according to claim 15, wherein, in a case in which the response indicates continuation of the provisional registration, the update means updates the provisional registration information such that the available period of the provisional registration information is extended.

17. The authentication information management device according to claim 16, wherein the update means extends the available period and adds predetermined privilege information to update the provisional registration information.

18. The authentication information management device according to any one of claims 15 to 17, wherein,
in a case in which the response indicates a definitive registration transition request including the first biometric information, personal information, and payment information, the update means deletes the provisional registration information including the first biometric information, and
the registration means registers definitive registration information in which the first biometric information, the personal information, and the payment information have been associated with one another.

19. The authentication information management device according to claim 18, wherein the registration means registers the definitive registration information to which predetermined privilege information has been given.

20. An authentication information management system comprising:
a registration terminal configured to receive first biometric information and a deposit of a predetermined amount of money from a user;
an authentication information management device; and
a payment terminal configured to receive second biometric information from a user who makes a payment, wherein
the registration terminal transmits a provisional registration request including the first biometric information and a deposit amount to the authentication information management device,
the authentication information management device registers provisional registration information in which a payment balance based on the deposit amount included in the provisional registration request received from the registration terminal has been associated with the first biometric information,
the payment terminal transmits a payment request including the second biometric information and a payment amount to the authentication information management device, and
the authentication information management device
controls first biometric authentication using the first biometric information for the second biometric information in response to the payment request received from the payment terminal,
pays the payment amount using the payment balance associated with the first biometric information in a case in which the first biometric authentication has succeeded, and
controls a use of the provisional registration information according to a result of determining whether or not the provisional registration information satisfies a first condition.

21. The authentication information management system according to claim 20, wherein the authentication information management device restricts the use of the provisional registration information in a case in which the provisional registration information satisfies the first condition.

22. An authentication information management method executed by a computer, the authentication information management method comprising:
acquiring a provisional registration request including first biometric information of a user and a deposit amount;
registering provisional registration information in which a payment balance based on the deposit amount included in the provisional registration request has been associated with the first biometric information;
controlling first biometric authentication using the first biometric information for second biometric information in response to a payment request including the second biometric information and a payment amount;
paying the payment amount using the payment balance associated with the first biometric information in a case in which the first biometric authentication has succeeded; and
controlling a use of the provisional registration information according to a result of determining whether or not the provisional registration information satisfies a first condition.

23. A non-transitory computer-readable medium storing an authentication information management program causing a computer to execute:
a process of acquiring a provisional registration request including first biometric information of a user and a deposit amount;
a process of registering provisional registration information in which a payment balance based on the deposit amount included in the provisional registration request has been associated with the first biometric information;
a process of controlling first biometric authentication using the first biometric information for second biometric information in response to a payment request including the second biometric information and a payment amount;
a process of paying the payment amount using the payment balance associated with the first biometric information in a case in which the first biometric authentication has succeeded; and
a process of controlling a use of the provisional registration information according to a result of determining whether or not the provisional registration information satisfies a first condition.
